(19) Europäisches Patentamt
European Patent Office
Office européen des brevets

(11) EP 3 741 793 B1

(12) **EUROPÄISCHE PATENTSCHRIFT**

(45) Veröffentlichungstag und Bekanntmachung des Hinweises auf die Patenterteilung:
**11.06.2025 Patentblatt 2025/24**

(21) Anmeldenummer: **20172059.6**

(22) Anmeldetag: **29.04.2020**

(51) Internationale Patentklassifikation (IPC):
***C08J 3/20*** *(2006.01)* ***C08J 5/04*** *(2006.01)*

(52) Gemeinsame Patentklassifikation (CPC):
**C08J 5/045;** C08J 2325/14; C08J 2333/12

(54) **FASERFORMTEILE**

FIBRE MOULDINGS

PIÈCES MOULÉES EN FIBRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.05.2019 EP 19175983**

(43) Veröffentlichungstag der Anmeldung:
**25.11.2020 Patentblatt 2020/48**

(73) Patentinhaber: **BASF SE**
**67056 Ludwigshafen am Rhein (DE)**

(72) Erfinder:
- **Flory, Mirko**
  **67056 Ludwigshafen am Rhein (DE)**
- **Kalbe, Michael**
  **67056 Ludwigshafen am Rhein (DE)**
- **Horler, Hans**
  **64285 Darmstadt (DE)**

(74) Vertreter: **BASF IP Association**
**BASF SE**
**GBI - Z078**
**67056 Ludwigshafen (DE)**

(56) Entgegenhaltungen:
**EP-A1- 2 487 204**
**WO-A1-2011/095824**
**WO-A1-2017/140520**
**DE-A1- 102006 006 580**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 741 793 B1

## Beschreibung

Gegenstand der vorliegenden Erfindung ist ein Verfahren zur Herstellung eines thermoverformbaren und/oder -prägbaren Faser/Polymer-Komposits unter Verwendung eines faserförmigen lignocellulosehaltigen Substrates S und eines Polymeren P, welches dadurch gekennzeichnet ist, dass

i) das Substrat S und das Polymer P homogen gemischt werden, danach
ii) die Substrat S/Polymer P-Mischung in einen Faserflor überführt wird, und danach
iii) der erhaltene Faserflor bei einer Temperatur größer oder gleich der Glasübergangstemperatur des Polymeren P [$Tg^P$] zu einem thermoverformbaren und/oder - prägbaren Faser/Polymer-Komposit verdichtet wird,

wobei

a) das Substrat S acetylierte lignocellulosehaltige Fasern umfasst, und
b) das Polymer P thermoplastisch ist und eine $Tg^P \geq 20$ °C gemessen nach DIN EN ISO 11357-2 (2013-05) aufweist und in Form einer wässrigen Dispersion eingesetzt wird, wobei im Anschluss an Verfahrensstufe i), während und/oder nach Verfahrensstufe ii) ein Trocknungsschritt erfolgt, und

wobei unter faserförmigen lignocellulosehaltigen Substrat solche Partikel verstanden werden, welche im Wesentlichen aus Lignocellulose aufgebaut sind und deren Verhältnis von ihrer längsten Ausdehnung zu ihrer kürzesten Ausdehnung wenigstens ≥ 5 und deren kürzeste Ausdehnung ≤ 2 mm beträgt, wobei die kürzeste Ausdehnung in einem Winkel von 90 ° zur Verbindungslinie ihrer längsten Ausdehnung bestimmt wird und
wobei ≥ 0,1 und ≤ 30 Gew.-% an Polymeren P, bezogen auf die Menge an faserförmigen Substrat S eingesetzt werden und
wobei sich die Dichte des Faser/Polymer-Komposits im Vergleich zum entsprechenden Faserflor um einen Faktor ≥ 3 erhöht.

Gegenstand der vorliegenden Erfindung sind darüber hinaus die nach dem erfindungsgemäßen Verfahren zugänglichen Faser/Polymer-Komposite selbst sowie deren Verwendung zur Herstellung von Faser/Polymer-Formteilen, wie beispielsweise Bauelemente im Fahrzeugbau, in Bauwerken und in Möbeln.

Die Herstellung von Holzfaserplatten erfolgt im Wesentlichen ausgehend von Rundholz, aber auch von Hackschnitzeln oder sogenannten Schwarten. Nach der Entrindung des Rundholzes wird dieses ebenso wie die Schwarten in Trommelhackern zu Hackschnitzeln zerkleinert. Nach der Abtrennung von Verunreinigungen wie Sand oder Steinen werden die Hackschnitzel zuerst in einem Vordämpfbehälter bei 100 °C einer hydrothermischen Vorbehandlung mittels Wasserdampf unterzogen. Daran anschließend werden die vorgedämpften Holzschnitzel in den sogenannten Kocher überführt, wo sie für zwei bis fünf Minuten in Wasser einer Temperatur von 140 bis 180 °C und einem Druck von 4 bis 8 bar (Überdruck) ausgesetzt werden. Danach werden die erweichten Hackschnitzel in den sogenannten Refiner überführt, wo sie ebenfalls bei einem Druck von 4 bis 8 bar (Überdruck) zwischen zwei relativ zueinander in einem Abstand von ca. 3 bis 0,1 mm rotierenden gerillten Mahlscheiben zermahlen und dabei zerfasert werden. Daran anschließend wird der erhaltene wässrige Holzfaserbrei in die sogenannte Blowline überführt, einem Rohr, welches einen deutlich geringeren Druck aufweist, was dazu führt, dass das Wasser verdampft und so als gasförmiges Transportmittel für die Holzfasern durch die Blowline dient (hydropneumatische Förderung). Durch zusätzliches Einblasen von aufgeheizter trockener Luft in die Blowline werden die Holzfasern getrocknet und pneumatisch weitertransportiert. Um einen möglichst gleichmäßigen Auftrag des zur Herstellung der Holzfaserplatten benötigten wässrigen, duroplastisch aushärtenden Bindemittels, wie insbesondere Formaldehydharze, wie Harnstoff/Formaldehyd-, Phenolformaldehyd-, Melaminformaldehyd-, Melamin/Harnstoff/Formaldehyd- oder Melamin/Phenol/Formaldehyd-Harze oder Isocyanate, wie Methylendiisocyanat oder Toluidendiisocyanat auf den Fasern zu gewährleisten, wird das wässrige, duroplastisch aushärtende Bindemittel an einer oder mehreren Stellen vor dem Einblasen der aufgeheizten trockenen Luft in die Blowline eingesprüht. Die nach der Trocknung anfallenden "beleimten" Fasern werden abgeschieden und in einen Faserflor (Fasermatte) überführt. Diese Fasermatte wird gegebenenfalls mittels einer ,kalten' Vorverdichtung komprimiert und anschließend unter Druck und hoher Temperatur (150 bis 230 °C) zu einem plattenförmigen Holzwerkstoff mit einer Dichte von 250 bis 1000 kg/$m^3$ verpresst. Durch die Verwendung duroplastisch härtender Bindemittel sind die so erhaltenen Holzfaserplatten jedoch nicht mehr thermisch verformbar.

Zur Herstellung thermisch verformbarer Formkörper, insbesondere Holzfaserplatten offenbart die WO 2007/73218 ganz allgemein die Verwendung von thermoplastischen Bindemitteln in flüssiger oder partikulärer Form. In diesem Zusammenhang werden u.a. auch wässrige Bindemittel-Dispersionen genannt. Als thermoplastische Bindemittel werden jedoch ganz allgemein geeignete Polymere offenbart und dabei in unspezifischer Weise eine Vielzahl völlig unterschiedlicher Polymere wie beispielsweise Acrylatpolymere, Urethanpolymere, Polyvinylchlorid, Polystyrol, Polyvinylalkohol, Polyamide, Polyester, aber auch Stärken und deren Derivate, Cellulosederivate, Proteine, Polysäuren, Polyisocyanate sowie reaktive Harzsysteme, wie Epoxyharze, ungesättigte Polyester, Urethan/Isocyanat-Harze oder Vorkondensate unterschiedlichster Formaldehydharze etc. genannt. In den Beispielen werden Pellets, Fasern, Pulver oder Schuppen von Polypropylen, säuremodifiziertes Polypropylen, Polymilchsäurefasern, Polyvinylalkohol, Polyolefincopolmer-Dispersionen, wie Ethylen/Acrylsäure- oder Ethylen/Maleinsäureanhydrid-Copolymerdispersionen ohne nähere Spezifizierung verwendet.

Ein verbessertes Verfahren zur Herstellung von thermoverformbaren Faser/Polymer-Kompositen wird in der WO 2017/140520 beschrieben, gemäß welchem in einem Gasstrom, vorteilhaft in einer Blowline, eine über eine spezifische wässrige Emulsionspolymerisation zugängliche wässrige Polymerdispersion mit einem faserförmigen Substrat in Kontakt gebracht, anschließend getrocknet und zu einem thermoverformbaren Faser/Polymer-Kompositen verdichtet wird, welches dann in einen nachgeschalteten Verfahrensschritt in ein Faser/Polymer-Formteil überführt wird. Weisen diese Faser/Polymer-Formteile jedoch scharfe Kanten oder keine glatten, sondern mit einem Muster geprägte Oberflächen, beispielsweise entsprechend einer Holzmaserung oder einem geometrischen Muster, auf, so vermögen diese scharfkantigen und/oder geprägten Faser/Polymer-Formteile in ihrer Wasserbeständigkeit nicht immer voll zu befriedigen.

Ein verbessertes Verfahren zur Herstellung von thermoverformbaren Faser/Polymer-Kompositen wird in der nicht vorveröffentlichten prioritätsbegründenden europäischen Patentanmeldung mit der Anmeldenummer EP 18188499.0 beschrieben, gemäß welchem in einem Gasstrom, vorteilhaft in einer Blowline, eine spezifische wässrige Polymerdispersion sowie zusätzlich eine Di- oder Polyisocyanatverbindung mit einem faserförmigen Substrat in Kontakt gebracht, anschließend getrocknet und zu einem thermoverformbaren Faser/Polymer-Komposit verdichtet wird, welches dann in einen nachgeschalteten Verfahrensschritt in ein Faser/Polymer-Formteil überführt wird.

Unbefriedigend an den vorgenannten Verfahren ist jedoch, dass die erhaltenen thermoverformbaren Faser/-Polymer-Komposite sowie die daraus zugänglichen Faser/Polymer-Formteile, abhängig von der Art und Menge des Bindemittels sowie der Art und Menge an faserförmigen lignocellulosehaltigen Substraten, in Kontakt mit Wasser immer noch eine unbefriedigende Dickenquellung aufweisen.

Aufgabe für die vorliegende Erfindung war es daher, ein Verfahren zur Herstellung eines thermoverformbaren und/oder -prägbaren Faser/Polymer-Komposits sowie eines daraus zugänglichen Faser/Polymer-Formteils zur Verfügung zu stellen, deren durch den Kontakt mit Wasser resultierenden Dickenquellung herabgesetzt bzw. in einem gewissen Rahmen gezielt eingestellt werden kann.

Die Aufgabe wurde überraschend durch das eingangs definierte Verfahren gelöst.

Ein kennzeichnendes Merkmal des erfindungsgemäßen Verfahrens ist, dass ein faserförmiges lignocellulosehaltiges Substrat S zur Herstellung des Faser/Polymer-Komposits eingesetzt wird. Erfindungsgemäß können alle faserförmigen lignocellulosehaltigen Substrate eingesetzt werden. Dabei soll unter einem faserförmigen lignocellulosehaltigen Substrat solche Partikel verstanden werden, welche im Wesentlichen aus Lignocellulose aufgebaut sind und deren Verhältnis von ihrer längsten Ausdehnung zu ihrer kürzesten Ausdehnung wenigstens ≥ 5, vorteilhaft ≥ 10 und insbesondere vorteilhaft ≥ 50 ist und deren kürzeste Ausdehnung ≤ 2 mm, vorteilhaft ≥ 0,001 und ≤ 0,5 mm und insbesondere vorteilhaft ≥ 0,001 und ≤ 0,1 mm beträgt. Wesentlich ist, dass die kürzeste Ausdehnung in einem Winkel von 90 ° zur Verbindungslinie ihrer längsten Ausdehnung bestimmt wird.

Bei den faserförmigen lignocellulosehaltigen Substraten S handelt es sich im Wesentlichen um pflanzliche Fasern, wie beispielsweise Baumwollfasern, Flachsfasern, Hanffasern, Kenaffasern, Jutefasern, Sisalfasern oder vorteihaft Holzfasern, wobei die Herstellung der vorgenannten Fasern dem Fachmann geläufig ist.

So erfolgt beispielsweise die Herstellung von Holzfasern vorteilhaft ausgehend von Rundholz, aber auch von Hackschnitzeln oder sogenannten Schwarten. Nach der Entrindung des Rundholzes wird dieses ebenso wie die Schwarten in Trommelhackern zu Hackschnitzeln zerkleinert. Nach der Abtrennung von Verunreinigungen wie Sand oder Steinen werden die Hackschnitzel zuerst in einem Vordämpfbehälter bei 100 °C einer hydrothermischen Vorbehandlung mittels Wasserdampf unterzogen. Daran anschließend werden die vorgedämpften Holzschnitzel in den sogenannten Kocher überführt, wo sie für zwei bis fünf Minuten in Wasser einer Temperatur von 140 bis 180 °C und einem Druck von 4 bis 8 bar (Überdruck) ausgesetzt werden. Danach werden die erweichten Hackschnitzel in den sogenannten Refiner überführt, wo sie ebenfalls bei einem Druck von 4 bis 8 bar (Überdruck) zwischen zwei relativ zueinander in einem Abstand von ca. 3 bis 0,1 mm rotierenden gerillten Mahlscheiben zermahlen und dabei zerfasert werden. Daran anschließend wird der erhaltene wässrige Holzfaserbrei in einem Trockner, beispielsweise in einem Trockenturm, einem Wirbelschichttrockner oder einer sogenannten Blowline getrocknet. Insbesondere werden zur Herstellung von Holzfasern Nadelholz, wie insbesondere Fichtenholz oder Kiefernholz sowie Laubholz, wie insbesondere Buchenholz oder Eukalyptusholz eingesetzt.

Verfahrenswesentlich ist, dass das faserförmige Substrat S acetylierte lignocellulosehaltige Fasern umfasst. Die Herstellung von acetylierten lignocellulosehaltigen Fasern (nachfolgend auch als ‚acetylierte Fasern' bezeichnet) ist dem Fachmann geläufig und erfolgt im Wesentlichen entweder durch direkte Acetylierung von lignocellulosehaltigen Fasern (siehe beispielsweise US-A 5,821,359) oder bevorzugt durch das Zerkleinern von acetyliertem Holz. Dabei versteht der

Fachmann unter acetyliertem Holz solches Holz, welches in einem Verfahren der chemischen Holzmodifikation mit Essigsäureanhydrid behandelt wurde. Die Herstellung von acetyliertem Holz mit Essigsäureanhydrid erfolgt vorteilhaft ausgehend von trockenem Holz, wobei sich grundsätzlich jede Holzart acetylieren lässt. Da sich aber jede Holzart etwas unterschiedlich bei der Acetylierung verhält, muss die Acetylierung auf die jeweilige Holzart abgestimmt werden und die angestrebten Produkteigenschaften zu erreichen. So gelten beispielsweise Eichenund Fichtenholz als schwer, hingegen Erlen-, Pappel- und Birkenholz als leicht acetylierbar. Die Herstellung von acetyliertem Holz ist dem Fachmann prinzipiell geläufig (siehe hierzu beispielsweise: Holger Militz, Übersichtsbericht - Acetyliertes Holz - [Naturwissenschaftliche und technologische Grundlagen, materialtechnische und ökonomische Möglichkeiten und Grenzen, aktueller Stand der Umsetzung]; SGD Süd-Forstliche Versuchsanstalt Rheinland-Pfalz, 2011, online abrufbar auf ‚http://www.waldrlp.de/fileadmin/website/fawfseiten/fawf/downloads/Projekte/Seeg/acetylierungsübersic ht.pdf; Ulf Lohmann: Holzlexikon, 4. Auflage, Nikol Verlagsgesellschaft, Hamburg 2010; A. Callum, S. Hill: Wood Modifikation: Chemical, Thermal and Other Processes, Wiley 2006; GB-A 2456915, US-B 6,632,326, EP-A 680810, WO 2005/077626, WO 2011/095824, WO 2014/131683 oder WO 2014/131684). Derartig behandeltes Holz - auch als sogenanntes ‚Accoya-Holz' im Handel erhältlich - wird wegen seiner Härte und Widerstandsfähigkeit gegen Feuchtigkeit für Holzkonstruktionen im Außenbereich, wie beispielsweise Brücken oder Tragegestelle eingesetzt. Erfindungsgemäß eingesetzte acetylierte Fasern werden vorteilhaft durch das Zerkleinern von acetyliertem Holz, insbesondere nach den voran beschriebenen Verfahren zur Herstellung von Holzfasern, hergestellt. Aus Kostengründen werden hierzu häufig Verschnitte oder Abfälle, wie sie bei der Herstellung von entsprechenden Holzbalken oder Holzkonstruktionselementen anfallen, eingesetzt.

Der Mengenanteil an acetylierten Fasern im Substrat S ist breit variierbar und letztlich abhängig von der maximal tolerierbaren Dickenquellung des herzustellenden Faser/Polymer-Komposits bzw. des daraus zugänglichen Faser/-Polymer-Formteils, welche durch den Kontakt mit Wasser resultiert. Der Anteil an acetylierten Fasern im Substrat S beträgt erfindungsgemäß ≥ 0,1 Gew.-%, häufig ≥ 10 Gew.-%, ≥ 20 Gew.-%, ≥ 30 Gew.-% oder ≥ 40 Gew.-%, vorteilhaft ≥ 50 Gew.-%, ≥ 60 Gew.-%, ≥ 70 Gew.-%, ≥ 80 Gew.-% oder ≥ 90 Gew.-% und besonders vorteilhaft 100 Gew.-% sowie häufig < 100 Gew.-%, ≤ 90 Gew.-%, ≤ 80 Gew.-%, ≤ 70 Gew.-%, ≤ 60 Gew.-%, aber auch ≤ 50 Gew.-%, ≤ 40 Gew.-%, ≤ 30 Gew.-%, ≤ 20 Gew.-% oder ≤ 10 Gew.-%. Besonders vorteilhaft sind die Anteile an acetylierten Fasern im Substrat S im Bereich ≥ 50 und ≤ 100 Gew.-% oder ≥ 80 und ≤ 100 Gew.-%.

Als weitere essentielle Komponente wird verfahrensgemäß ein thermoplastisches Polymer P eingesetzt, dessen nach DIN EN ISO 11357-2 (2013-05) gemessene Glasübergangstemperatur $Tg^P$ ≥ 20 °C, vorteilhaft ≥ 60 °C und insbesondere vorteilhaft ≥ 90 °C beträgt.

Dabei werden als thermoplastische Polymere P solche Polymere verstanden, welche sich in einem bestimmten Temperaturbereich (≥ $Tg^P$) verformen lassen, wobei dieser Vorgang reversibel ist, was nichts anderes bedeutet, dass er durch Abkühlung und Wiedererwärmung mehrmals wiederholt werden kann. Dabei ist jedoch darauf zu achten, dass das entsprechende Polymer nicht soweit erwärmt werden darf, dass eine thermische Zersetzung des Polymeren einsetzt. Von den thermoplastischen Polymeren prinzipiell zu unterscheiden sind die duroplastischen Polymere (Duroplaste), welche nach ihrer Herstellung, beispielsweise durch Aushärtung, nicht reversibel verformbar sind.

Verfahrensgemäß einsetzbar sind alle thermoplastischen Polymere, welche eine nach der vorgenannten Bestimmungsmethode ermittelte Glasübergangstemperatur ≥ 20 °C aufweisen, wie beispielsweise Acrylnitril/Butadien/Styrol-Copolymere, Polyamide, Po-lyacetate, Homo- oder Copolymerisate aus (Meth)acrylaten, Polycarbonate, Polyester, wie beispielsweise Polyethylenterephtalate, Polyolefine, wie beispielsweise Polyethylene oder Polypropylene, säuremodifizierte Polypropylene, Polystyrole, Polyetherketone, Polymilchsäure, Ethylen/Acrylsäure-Copolymere oder Polyvinylchloride. Dabei kann das thermoplastische Polymer P prinzipiell sowohl in Substanz, in wässriger Dispersion sowie in wässriger Lösung eingesetzt werden. Wird das Polymer P in Substanz eingesetzt, so kann das Polymer in Pulver-, Flocken- oder Faserform eingesetzt werden. Beispiele hierfür sind Polyethylen- bzw. Polypropylenpulver, -flocken oder -fasern. Bevorzugt werden jedoch wässrige Dispersionen von Polymeren P eingesetzt. Wässrige Polymerlösungen thermoplastischer Polymere spielen in der Regel lediglich eine untergeordnete Rolle.

Vorteilhaft wird das Polymer P in Form einer wässrigen Dispersion (nachfolgend auch als ‚wässrige Polymer P-Dispersion' bezeichnet), hergestellt durch radikalisch induzierte wässrige Emulsionspolymerisation von ethylenisch ungesättigten Monomeren P [Monomere P], eingesetzt. Mit besonderem Vorteil wird die wässrige Polymer P-Dispersion durch radikalisch initiierte Emulsionspolymerisation von Monomeren P in einem wässrigen Medium in Gegenwart eines Polymeren A hergestellt, wobei das Polymer A aus

| | |
|---|---|
| 80 bis 100 Gew.-% | wenigstens einer ethylenisch ungesättigten Mono- und/oder Dicarbonsäure [Monomere A1] und |
| 0 bis 20 Gew.-% | wenigstens eines weiteren ethylenisch ungesättigten Monomeren, welches sich von den Monomeren A1 unterscheidet [Monomere A2], |

in einpolymerisierter Form aufgebaut ist und wobei die Monomeren P in Art und Menge so gewählt werden, dass das

erhaltene Polymer P eine $Tg^P \geq 20$ °C aufweist.

Als Monomere A1 kommen insbesondere 3 bis 6 C-Atome aufweisende α,β-monoethylenisch ungesättigte Mono- und Dicarbonsäuren, deren mögliche Anhydride sowie deren wasserlöslichen Salze, insbesondere deren Alkalimetallsalze, wie beispielsweise Acrylsäure, Methacrylsäure, Maleinsäure, Fumarsäure, Itaconsäure, Citraconsäure, Tetrahydrophthalsäure, bzw. deren Anhydride, wie beispielsweise Maleinsäureanhydrid, sowie die Natrium- oder Kaliumsalze der vorgenannten Säuren in Betracht. Besonders bevorzugt sind Acrylsäure, Methacrylsäure, Maleinsäure und/oder Maleinsäureanhydrid, wobei Acrylsäure insbesondere bevorzugt ist.

Zur Herstellung des erfindungsgemäß eingesetzten Polymeren A kommt als wenigstens ein Monomer A2 insbesondere in einfacher Weise mit Monomer A1 radikalisch copolymerisierbare ethylenisch ungesättigte Verbindungen in Betracht, wie beispielsweise Ethylen, vinylaromatische Monomere, wie Styrol, α-Methylstyrol, o-Chlorstyrol oder Vinyltoluole, Vinylhalogenide, wie Vinylchlorid oder Vinylidenchlorid, Ester aus Vinylalkohol und 1 bis 18 C-Atome aufweisenden Monocarbonsäuren, wie Vinylacetat, Vinylpropionat, Vinyl-n-butyrat, Vinyllaurat und Vinylstearat, Ester aus vorzugsweise 3 bis 6 C-Atome aufweisenden α,β-monoethylenisch ungesättigten Mono- und Dicarbonsäuren, wie insbesondere Acrylsäure, Methacrylsäure, Maleinsäure, Fumarsäure und Itaconsäure, mit im allgemeinen 1 bis 12, vorzugsweise 1 bis 8 und insbesondere 1 bis 4 C-Atome aufweisenden Alkanolen, wie besonders Acrylsäure- und Methacrylsäuremethyl-, -ethyl-, -n-butyl-, -iso-butyl-, pentyl-, -hexyl-, -heptyl-, -octyl-, -nonyl-, -decylund -2-ethylhexylester, Fumar- und Maleinsäuredimethylester oder -di-n-butylester, Nitrile α,β-monoethylenisch ungesättigter Carbonsäuren, wie Acrylnitril, Methacrylnitril, Fumarsäuredinitril, Maleinsäuredinitril sowie $C_{4-8}$-konjugierte Diene, wie 1,3-Butadien (Butadien) und Isopren. Die genannten Monomere bilden in der Regel die Hauptmonomeren, die, bezogen auf die Gesamtmenge an Monomeren A2, einen Anteil von ≥ 50 Gew.-%, bevorzugt ≥ 80 Gew.-% und insbesondere bevorzugt ≥ 90 Gew.-% auf sich vereinen oder sogar die Gesamtmenge der Monomeren A2 bilden. In aller Regel weisen diese Monomeren in Wasser bei Normalbedingungen [20 °C, 1 atm (absolut)] lediglich eine mäßige bis geringe Löslichkeit auf.

Monomere A2, die unter den vorgenannten Bedingungen eine erhöhte Wasserlöslichkeit aufweisen, sind solche, die entweder wenigstens eine Sulfonsäuregruppe und/oder deren entsprechendes Anion bzw. wenigstens eine Amino-, Amido-, Ureido- oder N-heterocyclische Gruppe und/oder deren am Stickstoff protonierten oder alkylierten Ammoniumderivate enthalten. Beispielhaft genannt seien Acrylamid und Methacrylamid, ferner Vinylsulfonsäure, 2-Acrylamido-2-methylpropansulfonsäure, Styrolsulfonsäure und deren wasserlösliche Salze sowie N-Vinylpyrrolidon, 2-Vinylpyridin, 4-Vinylpyridin, 2-Vinylimidazol, 2-(N,N-Dimethylamino)ethylacrylat, 2-(N,N-Dimethylamino)ethylmethacrylat, 2-(N,N-Diethylamino)ethylacrylat, 2-(N,N-Diethylamino)ethylmethacrylat, 2-(N-tert.-Butylamino)ethylmethacrylat, N-(3-N',N'-Dimethylaminopropyl)methacrylamid und 2-(1-Imidazolin-2-onyl)ethylmethacrylat. Im Normalfall sind die vorgenannten wasserlöslichen Monomeren A2 lediglich als modifizierende Monomere in Mengen von ≤ 10 Gew.-%, bevorzugt ≤ 5 Gew.-% und insbesondere bevorzugt ≤ 3 Gew.-%, bezogen auf die Gesamtmenge an Monomeren A2, enthalten.

Monomere A2, die üblicherweise die innere Festigkeit der Verfilmungen einer Polymermatrix erhöhen, weisen normalerweise wenigstens eine Epoxy-, Hydroxy-, N-Methylol- oder Carbonylgruppe, oder wenigstens zwei nicht konjugierte ethylenisch ungesättigte Doppelbindungen auf. Beispiele hierfür sind zwei Vinylreste aufweisende Monomere, zwei Vinylidenreste aufweisende Monomere sowie zwei Alkenylreste aufweisende Monomere. Besonders vorteilhaft sind dabei die Di-Ester zweiwertiger Alkohole mit α,β-monoethylenisch ungesättigten Monocarbonsäuren unter denen die Acrylund Methacrylsäure bevorzugt sind. Beispiele für derartige zwei nicht konjugierte ethylenisch ungesättigte Doppelbindungen aufweisende Monomere sind Alkylenglykoldiacrylate und -dimethacrylate, wie Ethylenglykoldiacrylat, 1,2-Propylenglykoldiacrylat, 1,3-Propylenglykoldiacrylat, 1,3-Butylenglykoldiacrylat, 1,4-Butylenglykoldiacrylate und Ethylenglykoldimethacrylat, 1,2-Propylenglykoldimethacrylat, 1,3-Propylenglykoldimethacrylat, 1,3-Butylenglykoldimethacrylat, 1,4-Butylenglykoldimethacrylat sowie Divinylbenzol, Vinylmethacrylat, Vinylacrylat, Allylmethacrylat, Allylacrylat, Diallylmaleat, Diallylfumarat, Methylenbisacrylamid, Cyclopentadienylacrylat, Triallylcyanurat oder Triallylisocyanurat. In diesem Zusammenhang von besonderer Bedeutung sind auch die Methacrylsäure- und Acrylsäure-$C_1$-$C_8$-Hydroxyalkylester wie n-Hydroxyethyl-, n-Hydroxypropyl- oder n-Hydroxybutylacrylat und -methacrylat sowie Verbindungen, wie Diacetonacrylamid und Acetylacetoxyethylacrylat bzw. -methacrylat. Häufig werden die vorgenannten vernetzenden Monomeren A2 in Mengen von ≤ 10 zu Gew.-%, bevorzugt jedoch in Mengen von ≤ 5 Gew.-%, jeweils bezogen auf die Gesamtmenge an Monomeren A2, eingesetzt. Insbesondere bevorzugt werden jedoch keinerlei derartige vernetzende Monomere A2 zu Herstellung des Polymeren A eingesetzt.

Vorteilhaft werden zur Herstellung der Polymeren A als Monomere A2 nur solche Monomerenmischungen eingesetzt, welche zu

| | |
|---|---|
| 90 bis 100 Gew.-% | Ester der Acryl- und/oder Methacrylsäure mit 1 bis 12 C-Atome aufweisenden Alkanolen, oder |
| 90 bis 100 Gew.-% | Styrol und/oder Butadien, oder |
| 90 bis 100 Gew.-% | Vinylchlorid und/oder Vinylidenchlorid, oder |

(fortgesetzt)

| | |
|---|---|
| 90 bis 100 Gew.-% | Vinylacetat, Vinylpropionat und/oder Ethylen |

enthalten.

Erfindungsgemäß beträgt der einpolymerisierte Anteil an Monomeren A2 im Polymer A 0 bis 20 Gew.-%, vorteilhaft ≤ 10 Gew.-% oder ≤ 5 Gew.-% und ≥ 0,1 Gew.-%. In einer weiteren vorteilhaften Ausführungsform enthält das Polymer A keinerlei Monomere A2 einpolymerisiert. Dementsprechend ist das Polymer A zu ≥ 80 Gew.-%, vorteilhaft zu ≥ 90 Gew.-% oder ≥ 95 Gew.-% und in einer weiteren Ausführungsform zu 100 Gew.-% aus Monomeren A1 in einpolymerisierter Form aufgebaut, wobei als Monomeren A1 Acrylsäure, Methacrylsäure, Maleinsäure und/oder Maleinsäureanhydrid besonders bevorzugt sind.

Die erfindungsgemäß eingesetzten Polymere A werden in der Regel durch radikalisch initiierte Polymerisation der Monomeren A in einem wässrigen Medium hergestellt. Mit Vorteil erfolgt die Herstellung der Polymeren A in Anwesenheit wenigstens eines Radikalkettenreglers, wobei schwefel-, stickstoff-, und/oder phosphorhaltigen Radikalkettenregler, welche bei 20 °C und 1 atm in entionisiertem Wasser eine Löslichkeit ≥ 5 g/100 g Wasser aufweisen, besonders bevorzugt sind.

Als schwefelhaltige Radikalkettenregler werden beispielsweise Mercaptoalkanole, wie 2-Mercaptoethanol, 2-Mercaptopropanol oder 3-Mercaptopropanol, Alkalimetallhydrogensulfite, wie Natriumhydrogensulfit oder Kaliumhydrogensulfit, sowie Thioschwefelsäure und deren Alkalimetallsalze oder 3-Mercapto-2-aminopropansäure (Cystein), als stickstoffhaltige Radikalkettenregler beispielsweise Hydroxylamin(ammonium)-Verbindungen, wie Hydroxylammoniumsulfat und als phosphorhaltige Radikalkettenregler beispielsweise phosphorige Säure, hypophosphorige Säure, metaphosphorige Säure, Orthophosphorsäure, Pyrophosphorsäure oder Polyphosphorsäure und deren Alkalimetallsalze, insbesondere deren Natrium- oder Kaliumsalze, vorteilhaft Natriumhypophosphit oder Natriumdihydrogenphosphat eingesetzt.

Insbesondere vorteilhaft ist der Radikalkettenregler ausgewählt unter hypophosphoriger Säure und deren Alkalimetallsalze, insbesondere Natriumhypophosphit, Alkalimetallhydrogensulfite, insbesondere Natriumhydrogensulfit, Hydroxylamoniumsulfat und/oder 2-Mercaptoethanol.

Bei der Herstellung der Polymeren A ist es vorteilhaft, wenn die Art und Menge des Radikalkettenreglers so gewählt wird, dass das zahlenmittlere Molekulargewicht der Polymeren A ≥ 1000 und ≤ 30000 g/mol, vorzugsweise ≥ 1000 und ≤ 20000 g/mol und insbesondere vorteilhaft ≥ 3000 und ≤ 20000 g/mol beträgt. Die entsprechenden Polymerisationsbedingungen kennt der Fachmann oder kann von diesem in einfachen Routineversuchen ermittelt werden.

Die Molekulargewichtsbestimmung für die Polymere A erfolgt im Rahmen dieser Schrift generell unter Verwendung von zwei in Reihe geschalteten TSKgel G 3000 PWXL-Säulen der Firma Tosoh bei einer Temperatur von 35 °C, mit einem Elutionsmittel bestehend aus entionisiertem Wasser mit 0,01 mol/l Phosphatpuffer pH-Wert 7,4 und 0,01 mol/l $NaN_3$, einer Durchflussgeschwindigkeit von 0,5 ml pro Minute, einer Injektionsmenge von 100 µl, einer Konzentration der injizierten Lösung von 1 bis 2 mg pro ml sowie einem DRI-Detektor der Firma Agilent Technologies GmbH. Als innerer Standard/Eichsubstanz wurde Polyacrylsäure-Natriumsalz mit unterschiedlichen definierten Molekulargewichten verwendet.

Die prinzipielle Herstellung der Polymeren A ist dem Fachmann geläufig (siehe beispielsweise A. Echte, Handbuch der Technischen Polymerchemie, Kapitel 6, VCH, Weinheim, 1993 oder B. Vollmert, Grundriss der Makromolekularen Chemie, Band 1, E. Vollmert Verlag, Karlsruhe, 1988).

Erfindungsgemäß von Bedeutung ist, dass das Polymer A prinzipiell sowohl in der Säureform, sowie auch in einer teil- oder vollneutralisierten Form eingesetzt werden kann, wobei zur Teil- oder Vollneutralisation die technisch üblichen Basen, wie die Hydroxide der Alkali- und Erdalkalimetalle, wie insbesondere Natriumhydroxid oder Kaliumhydroxid sowie darüber hinaus auch noch Ammoniumhydroxid Verwendung finden. Erfindungsgemäß bevorzugt werden die Polymere A in wässrigem Medium teilneutralisiert eingesetzt, wobei mit der Base vorteilhaft ein pH-Wert im Bereich ≥ 1 und ≤ 6 und besonders vorteilhaft ≥ 2 und ≤ 4 eingestellt wird.

Bei der Herstellung des erfindungsgemäß eingesetzten Polymeren P ist es möglich, gegebenenfalls eine Teil- oder die Gesamtmenge an Polymeren A im wässrigen Polymerisationsmedium vorzulegen. Es ist aber auch möglich, die Gesamtmenge oder die gegebenenfalls verbliebene Restmenge an Polymeren A während der Polymerisationsreaktion gemeinsam mit den Monomeren P zuzudosieren. Die Gesamtmenge oder die gegebenenfalls verbliebene Restmenge an Polymeren A kann dem wässrigen Polymerisationsmedium dabei diskontinuierlich in einer oder mehreren Portionen oder kontinuierlich mit gleichbleibenden oder sich verändernden Mengenströmen zudosiert werden. Vorteilhaft wird die Gesamtmenge an Polymeren A vor Auslösung der Polymerisationsreaktion der Monomeren P im wässrigen Polymerisationsmedium vorgelegt. In einer weiteren vorteilhaften Ausführungsform wird das Polymer A "in-situ" im Polymerisationsmedium für die Polymerisation der Monomeren P hergestellt.

Von Bedeutung ist, dass das wässrige Polymerisationsmedium bei der Herstellung des Polymeren P neben dem Polymeren A zusätzlich noch Dispergierhilfsmittel enthalten kann, welche sowohl die Monomerentröpfchen als auch die

durch die radikalisch initiierte Polymerisation der Monomeren P erhaltenen Dispersionsteilchen des Polymeren P in der wässrigen Phase dispers verteilt halten und so die Stabilität der erzeugten wässrigen Polymerzusammensetzung gewährleisten. Als solche kommen sowohl die zur Durchführung von radikalischen wässrigen Emulsionspolymerisationen üblicherweise eingesetzten Schutzkolloide als auch Emulgatoren in Betracht.

Geeignete Schutzkolloide sind beispielsweise Polyvinylalkohole, Cellulosederivate oder Vinylpyrrolidon enthaltende Copolymerisate. Eine ausführliche Beschreibung weiterer geeigneter Schutzkolloide findet sich in Houben-Weyl, Methoden der organischen Chemie, Band XIV/1, Makromolekulare Stoffe, Seiten 411 bis 420, Georg-Thieme-Verlag, Stuttgart, 1961. Da das erfindungsgemäß eingesetzte Polymer A auch als Schutzkolloid wirken kann, werden erfindungsgemäß vorteilhaft keine zusätzlichen Schutzkolloide eingesetzt.

Selbstverständlich können auch Gemische aus Emulgatoren und/oder Schutzkolloiden verwendet werden. Häufig werden als Dispergierhilfsmittel ausschließlich Emulgatoren eingesetzt, deren relative Molekulargewichte im Unterschied zu den Schutzkolloiden üblicherweise unter 1000 g/mol liegen. Sie können sowohl anionischer, kationischer oder nichtionischer Natur sein. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Im Allgemeinen sind anionische Emulgatoren untereinander und mit nichtionischen Emulgatoren verträglich. Desgleichen gilt auch für kationische Emulgatoren, während anionische und kationische Emulgatoren meistens nicht miteinander verträglich sind.

Gebräuchliche Emulgatoren sind z.B. ethoxilierte Mono-, Di- und Tri-Alkylphenole (EO-Grad: 3 bis 50, Alkylrest: $C_4$ bis $C_{12}$), ethoxilierte Fettalkohole (EO-Grad: 3 bis 50; Alkylrest: $C_8$ bis $C_{36}$) sowie Alkalimetall- und Ammoniumsalze von Alkylsulfaten (Alkylrest: $C_8$ bis $C_{12}$), von Schwefelsäurehalbestern ethoxylierter Alkanole (EO-Grad: 3 bis 30, Alkylrest: $C_{12}$ bis $C_{18}$) und ethoxilierter Alkylphenole (EO-Grad: 3 bis 50, Alkylrest: $C_4$ bis $C_{12}$), von Alkylsulfonsäuren (Alkylrest: $C_{12}$ bis $C_{18}$) und von Alkylarylsulfonsäuren (Alkylrest: $C_9$ bis $C_{18}$). Weitere geeignete Emulgatoren finden sich in Houben-Weyl, Methoden der organischen Chemie, Band XIV/1, Makromolekulare Stoffe, Seiten 192 bis 208, Georg-Thieme-Verlag, Stuttgart, 1961.

Als grenzflächenaktive Substanzen haben sich ferner Verbindungen der allgemeinen Formel I

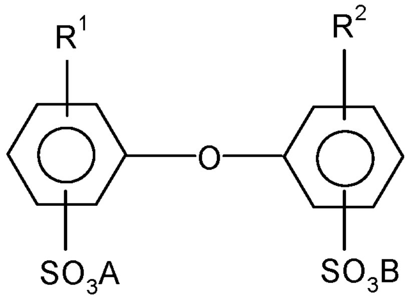

(I)

worin $R^1$ und $R^2$ $C_4$- bis $C_{24}$-Alkyl bedeuten und einer der Reste $R^1$ oder $R^2$ auch für Wasserstoff stehen kann, und A und B Alkalimetallionen und/oder Ammoniumionen sein können, erwiesen. In der allgemeinen Formel I bedeuten $R^1$ und $R^2$ bevorzugt lineare oder verzweigte Alkylreste mit 6 bis 18 C-Atomen, insbesondere mit 6, 12 und 16 C-Atomen oder H-Atome, wobei $R^1$ und $R^2$ nicht beide gleichzeitig H-Atome sind. A und B sind bevorzugt Natrium-, Kalium -oder Ammoniumionen, wobei Natriumionen besonders bevorzugt sind. Besonders vorteilhaft sind Verbindungen I, in denen A und B Natriumionen, $R^1$ ein verzweigter Alkylrest mit 12 C-Atomen und $R^2$ ein H-Atom oder $R^1$ sind. Häufig werden technische Gemische verwendet, die einen Anteil von 50 bis 90 Gew.-% des monoalkylierten Produktes aufweisen, beispielsweise Dowfax® 2A1 (Marke der Dow Chemical Company). Die Verbindungen I sind allgemein bekannt, z.B. aus US-A 4 269 749, und im Handel erhältlich.

Werden bei der Herstellung der wässrigen Polymer P-Dispersionen Dispergierhilfsmittel mitverwendet, so beträgt die Gesamtmenge an eingesetzten Dispergierhilfsmitteln, insbesondere Emulgatoren, 0,1 bis 5 Gew.-%, bevorzugt 1 bis 3 Gew.-%, jeweils bezogen auf die Gesamtmenge der Monomeren P (Gesamtmonomerenmenge P). In einer vorteilhaften Ausführungsform werden Emulgatoren als alleinige Dispergierhilfsmittel eingesetzt.

Werden bei der Herstellung der wässrigen Polymer P-Dispersionen Dispergierhilfsmittel mitverwendet, so ist es möglich, gegebenenfalls eine Teil- oder die Gesamtmenge an Dispergierhilfsmitteln als Bestandteil des das Polymer A enthaltenden wässrigen Mediums vorzulegen. Es ist aber auch möglich, die Gesamtmenge oder die gegebenenfalls verbliebene Restmenge an Dispergierhilfsmitteln während der Polymerisationsreaktion gemeinsam mit den Monomeren P zuzudosieren. Die Gesamtmenge oder die gegebenenfalls verbliebene Restmenge an Dispergierhilfsmitteln kann dem wässrigen Polymerisationsmedium dabei diskontinuierlich in einer oder mehreren Portionen oder kontinuierlich mit gleichbleibenden oder sich verändernden Mengenströmen zudosiert werden.

Erfindungswesentlich ist, dass bei der radikalisch initiierten wässrigen Emulsionspolymerisation der Monomeren P diese in Art und Menge so gewählt werden, dass das erhaltene Polymer P eine Glasübergangstemperatur Tg ≥ 20 °C, vorteilhaft ≥ 60 °C und insbesondere vorteilhaft ≥ 90 °C gemessen nach DIN EN ISO 11357-2 (2013-05) aufweist.

Die Durchführung von radikalisch initiierten Emulsionspolymerisationen von ethylenisch ungesättigten Verbindungen (Monomere) in einem wässrigen Medium ist vielfach vorbeschrieben und dem Fachmann daher hinreichend bekannt [vgl. hierzu Emulsionspolymerisation in Encyclopedia of Polymer Science and Engineering, Vol. 8, Seiten 659 ff. (1987); D.C. Blackley, in High Polymer Latices, Vol. 1, Seiten 35 ff. (1966); H. Warson, The Applications of Synthetic Resin Emulsions, Kapitel 5, Seiten 246 ff. (1972); D. Diederich, Chemie in unserer Zeit 24, Seiten 135 bis 142 (1990); Emulsion Polymerisation, Interscience Publishers, New York (1965); DE-A 40 03 422 und Dispersionen synthetischer Hochpolymerer, F. Hölscher, Springer-Verlag, Berlin (1969)]. Die radikalisch initiierte wässrige Emulsionspolymerisation erfolgt üblicherweise dergestalt, dass man die Monomere, in der Regel unter Mitverwendung von Dispergierhilfsmitteln, wie Emulgatoren und/oder Schutzkolloiden, in wässrigem Medium dispers verteilt und mittels wenigstens eines wasserlöslichen radikalischen Polymerisationsinitiators polymerisiert. Häufig werden bei den erhaltenen wässrigen Polymerisatdispersionen die Restgehalte an nicht umgesetzten Monomeren durch dem Fachmann ebenfalls bekannte chemische und/oder physikalische Methoden [siehe beispielsweise EP-A 771328, DE-A 19624299, DE-A 19621027, DE-A 19741184, DE-A 19741187, DE-A 19805122, DE-A 19828183, DE-A 19839199, DE-A 19840586 und 19847115] herabgesetzt, der Polymerisatfeststoffgehalt durch Verdünnung oder Aufkonzentration auf einen gewünschten Wert eingestellt oder der wässrigen Polymerisatdispersion weitere übliche Zusatzstoffe, wie beispielsweise schaum- oder viskositätsmodifizierende Additive zugesetzt. Von dieser allgemeinen Verfahrensweise unterscheidet sich die Herstellung einer erfindungsgemäß eingesetzten wässrigen Polymer P-Dispersion lediglich dadurch, dass die Monomeren P - in einer bevorzugten Ausführungsform in Anwesenheit wenigstens eines Polymeren A - polymerisiert werden und dabei in Art und Menge so gewählt werden, dass die gebildeten Polymeren P eine Glasübergangstemperatur Tg ≥ 20 °C gemessen nach DIN EN ISO 11357-2 (2013-05) aufweisen. Dabei ist es selbstverständlich, dass zur Herstellung der Polymere P im Rahmen der vorliegenden Schrift auch die dem Fachmann geläufigen Saat-, Stufen- und Gradientenfahrweisen mit umfasst sein sollen. Werden Stufenpolymere eingesetzt, so weist wenigstens das Polymer einer Stufe eine Glasübergangstemperatur Tg ≥ 20 °C auf. Mit Vorteil weisen wenigstens 50 Gew.-% und mit besonderem Vorteil wengistens 90 Gew.-% des Stufenpolymers ein Polymer P mit einer Glasübergangstemperatur Tg ≥ 20 °C, vorteilhaft ≥ 60 °C und insbesondere vorteilhaft ≥ 90 °C auf. Erfindungsgemäß vorteilhaft werden jedoch Einstufenpolymere mit einer Glasübergangstemperatur Tg ≥ 20 °C, vorteilhaft ≥ 60 °C und insbesondere vorteilhaft ≥ 90 °C als Polymere P eingesetzt.

Als Monomere P kommen insbesondere in einfacher Weise radikalisch polymerisierbare ethylenisch ungesättigte Monomere in Betracht, wie beispielsweise Ethylen, vinylaromatische Monomere, wie Styrol, α-Methylstyrol, o-Chlorstyrol oder Vinyltoluole, Vinylhalogenide, wie Vinylchlorid oder Vinylidenchlorid, Ester aus Vinylalkohol und 1 bis 18 C-Atome aufweisenden Monocarbonsäuren, wie Vinylacetat, Vinylpropionat, Vinyl-n-butyrat, Vinyllaurat und Vinylstearat, Ester aus vorzugsweise 3 bis 6 C-Atome aufweisenden α,β-monoethylenisch ungesättigten Mono- und Dicarbonsäuren, wie insbesondere Acrylsäure, Methacrylsäure, Maleinsäure, Fumarsäure und Itaconsäure, mit im allgemeinen 1 bis 12, vorzugsweise 1 bis 8 und insbesondere 1 bis 4 C-Atome aufweisenden Alkanolen, wie besonders Acrylsäure- und Methacrylsäuremethyl-, -ethyl-, -n-butyl-, -iso-butyl-, pentyl-, -hexyl-, -heptyl-, -octyl-, -nonyl-, -decyl- und -2-ethylhexylester, Fumar- und Maleinsäuredimethylester oder -di-n-butylester, Nitrile α,β-monoethylenisch ungesättigter Carbonsäuren, wie Acrylnitril, Methacrylnitril, Fumarsäuredinitril, Maleinsäuredinitril sowie $C_{4-8}$-konjugierte Diene, wie 1,3-Butadien und Isopren. Die genannten Monomere bilden in der Regel die Hauptmonomeren, die, bezogen auf die zur Herstellung des Polymeren P eingesetzte Menge aller Monomeren P (Gesamtmonomerenmenge P), einen Anteil ≥ 80 Gew.-% und bevorzugt ≥ 90 Gew.-% auf sich vereinen. In aller Regel weisen diese Monomeren in Wasser bei Normalbedingungen [20 °C, 1 atm] lediglich eine mäßige bis geringe Löslichkeit auf.

Monomere P, die unter den vorgenannten Bedingungen eine erhöhte Wasserlöslichkeit aufweisen, sind solche, die entweder wenigstens eine Säuregruppe und/oder deren entsprechendes Anion bzw. wenigstens eine Amino-, Amido-, Ureido- oder N-heterocyclische Gruppe und/oder deren am Stickstoff protonierten oder alkylierten Ammoniumderivate enthalten. Beispielhaft genannt seien α,β-monoethylenisch ungesättigte Mono- und Dicarbonsäuren und deren Amide, wie z.B. Acrylsäure, Methacrylsäure, Maleinsäure, Fumarsäure, Itaconsäure, Acrylamid und Methacrylamid, ferner Vinylsulfonsäure, 2-Acrylamido-2-methylpropansulfonsäure, Styrolsulfonsäure und deren wasserlösliche Salze sowie N-Vinylpyrrolidon, 2-Vinylpyridin, 4-Vinylpyridin, 2-Vinylimidazol, 2-Aminoethylacrylat, 2-Aminoethylmethacrylat, 2-Aminopropylacrylat, 2-Aminopropylmethacrylat, 3-Aminopropylacrylat, 3-Aminopropylmethacrylat, 2-(N,N-Dimethylamino) ethylacrylat, 2-(N,N-Dimethylamino)ethylmethacrylat, 2-(N,N-Diethylamino)ethylacrylat, 2-(N,N-Diethylamino)ethylmethacrylat, 2-(N-tert.-Butylamino)ethylmethacrylat, N-(3-N',N'-Dimethylaminopropyl)methacrylamid und 2-(1-Imidazolin-2-onyl)ethylmethacrylat. Im Normalfall sind die vorgenannten Monomeren P lediglich als modifizierende Monomere in Mengen ≤ 10 Gew.-% und bevorzugt ≤ 5 Gew.-%, bezogen auf die Gesamtmonomerenmenge P, enthalten.

Monomere P, die üblicherweise die innere Festigkeit der Verfilmungen der Polymermatrix erhöhen, weisen normalerweise wenigstens eine Epoxy-, Hydroxy-, N-Methyloloder Carbonylgruppe, oder wenigstens zwei nicht konjugierte ethylenisch ungesättigte Doppelbindungen auf. Beispiele hierfür sind zwei Vinylreste aufweisende Monomere, zwei Vinylidenreste aufweisende Monomere sowie zwei Alkenylreste aufweisende Monomere. Besonders vorteilhaft sind

dabei die Di-Ester zweiwertiger Alkohole mit α,β-monoethylenisch ungesättigten Monocarbonsäuren unter denen die Acryl- und Methacrylsäure bevorzugt sind. Beispiele für derartige zwei nicht konjugierte ethylenisch ungesättigte Doppelbindungen aufweisende Monomere sind Alkylenglykoldiacrylate und - dimethacrylate, wie Ethylenglykoldiacrylat, 1,2-Propylenglykoldiacrylat, 1,3-Propylenglykoldiacrylat, 1,3-Butylenglykoldiacrylat, 1,4-Butylenglykoldiacrylate und Ethylenglykoldimethacrylat, 1,2-Propylenglykoldimethacrylat, 1,3-Propylenglykoldimethacrylat, 1,3-Butylenglykoldimethacrylat, 1,4-Butylenglykoldimethacrylat sowie 1,2-, 1,3- oder 1,4-Divinylbenzol, Vinylmethacrylat, Vinylacrylat, Allylmethacrylat, Allylacrylat, Diallylmaleat, Diallylfumarat, Methylenbisacrylamid, Cyclopentadienylacrylat, Triallylcyanurat oder Triallylisocyanurat. In diesem Zusammenhang von besonderer Bedeutung sind auch die Methacrylsäure- und Acrylsäure-C1-C8-Hydroxyalkylester wie 2-Hydroxyethyl-, 2-Hydroxypropyl-, 3-Hydroxyoder 4-Hydroxybutylacrylat und -methacrylat sowie Verbindungen, wie Diacetonacrylamid und Acetylacetoxyethylacrylat bzw. -methacrylat. Häufig werden die vorgenannten Monomeren in Mengen ≤ 10 Gew.-%, bevorzugt jedoch in Mengen ≤ 5 Gew.-%, jeweils bezogen auf die Gesamtmonomerenmenge P, eingesetzt.

In einer bevorzugten Ausführungsform sind die Monomeren P bei der Herstellung der Polymeren P zu ≥ 90 Gew.-% ausgewählt aus der Gruppe umfassend Olefine, vinylaromatische Monomere, Vinylhalogenide, Ester aus Vinylalkohol und 1 bis 18 C-Atome aufweisenden Monocarbonsäuren, Ester aus 3 bis 6 C-Atome aufweisenden α,β-monoethylenisch ungesättigten Mono- und Dicarbonsäuren mit 1 bis 12 C-Atome aufweisenden Alkanolen, Nitrile α,β-monoethylenisch ungesättigter Carbonsäuren sowie $C_{4-8}$-konjugierte Diene und zu ≤ 10 Gew.-% ausgewählt sind aus der Gruppe umfassend 3 bis 6 C-Atome aufweisende α,β-monoethylenisch ungesättigte Mono- und Dicarbonsäuren und deren Amide, sowie monoethylenisch ungesättigte Verbindungen, welche wenigstens eine Amino-, Epoxy-, Hydroxy-, N-Methylol- oder Carbonylgruppe aufweisen und Verbindungen, welche wenigstens zwei nicht konjugierte ethylenisch ungesättigte Doppelbindungen aufweisen.

In einer weiteren bevorzugten Ausführungsform werden zur Herstellung des Polymeren P

| | |
|---|---|
| ≥ 90 und ≤ 99,9 Gew.-% | Styrol und/oder Methylmethacrylat, |
| ≥ 0 und ≤ 9,9 Gew.-% | n-Butylacrylat und/oder 2-Ethylhexylacrylat, und |
| ≥ 0,1 und ≤ 10,0 Gew.-% | Acrylsäure, Methacrylsäure, Glycidylacrylat, Glycidylmethacrylat, 2-Hydroxyethyl-, 2-Hydroxypropyl- und 3-Hydroxypropyl-, 2-Aminoethyl-, 2-Aminopropyl- und 3-Aminopropylacrylat und -methacrylat, 1,4-Butylenglykoldiacrylat und -methacrylat, 1,2-, 1,3- und 1,4-Divinylbenzol, Allylacrylat und/oder Allylmethacrylat |

eingesetzt, wobei sich die Mengen zu 100 Gew.-% aufsummieren.

In einer weiteren bevorzugten Ausführungsform werden zur Herstellung des Polymeren P

| | |
|---|---|
| ≥ 90 und ≤ 99,9 Gew.-% | Styrol und/oder Methylmethacrylat, |
| ≥ 0 und ≤ 9,9 Gew.-% | n-Butylacrylat und/oder 2-Ethylhexylacrylat, und |
| ≥ 0,1 und ≤ 2,0 Gew.-% | 1,4-Butylenglykoldiacrylat und -methacrylat, 1,2-, 1,3- und 1,4-Divinylbenzol, Allylacrylat und/oder Allylmethacrylat |

eingesetzt, wobei sich die Mengen zu 100 Gew.-% aufsummieren.

In einer besonders bevorzugten Ausführungsform werden zur Herstellung des Polymeren P

| | |
|---|---|
| ≥ 90 und ≤ 99,7 Gew.-% | Styrol und/oder Methylmethacrylat, |
| ≥ 0 und ≤ 9,9 Gew.-% | n-Butylacrylat und/oder 2-Ethylhexylacrylat, und |
| ≥ 0,1 und ≤ 5,0 Gew.-% | Acrylsäure, Methacrylsäure, 2-Hydroxyethyl-, 2-Hydroxypropyl- und 3-Hydroxypropyl-, 2-Aminoethyl-, 2-Aminopropyl- und 3-Aminopropylacrylat und/oder - methacrylat, |
| ≥ 0,1 und ≤ 2,0 Gew.-% | 1,4-Butylenglykoldiacrylat und -methacrylat, 1,2-, 1,3- und 1,4-Divinylbenzol, Allylacrylat und/oder Allylmethacrylat, sowie |
| ≥ 0,1 und ≤ 4,0 Gew.-% | Glycidylacrylat und/oder Glycidylmethacrylat, |

und insbesondere

| | |
|---|---|
| ≥ 92 und ≤ 97,8 Gew.-% | Styrol und/oder Methylmethacrylat, |
| ≥ 0,1 und ≤ 2,0 Gew.-% | Acrylsäure und/oder 2-Hydroxyethylacrylat, |
| ≥ 0,1 und ≤ 2,0 Gew.-% | 1,4-Butylenglykoldiacrylat und/oder Allylmethacrylat, sowie |

(fortgesetzt)

| | |
|---|---|
| ≥ 2,0 und ≤ 4,0 Gew.-% | Glycidylacrylat und/oder Glycidylmethacrylat |

eingesetzt, wobei sich jeweils die Mengen zu 100 Gew.-% aufsummieren.

Die radikalisch initiierte wässrige Emulsionspolymerisation zur Herstellung der Polymeren P wird in der Regel in Gegenwart von 0,1 bis 5 Gew.-%, vorzugsweise 0,1 bis 4 Gew.-% und insbesondere 0,1 bis 3 Gew.-%, jeweils bezogen auf die Gesamtmonomerenmenge P, eines radikalischen Polymerisationsinitiators (Radikalinitiator) durchgeführt. Als Radikalinitiatoren kommen alle diejenigen in Betracht, die in der Lage sind, eine radikalische wässrige Emulsionspolymerisation auszulösen. Es kann sich dabei prinzipiell sowohl um Peroxide als auch um Azoverbindungen handeln. Selbstverständlich kommen auch Redoxinitiatorsysteme in Betracht. Als Peroxide können prinzipiell anorganische Peroxide, wie Wasserstoffperoxid oder Peroxodisulfate, wie die Monooder Di-Alkalimetall- oder Ammoniumsalze der Peroxodischwefelsäure, wie beispielsweise deren Mono- und Di-Natrium-, -Kalium- oder Ammoniumsalze oder organische Peroxide, wie Alkylhydroperoxide, beispielsweise tert.-Butyl-, p-Menthyl- oder Cumylhydroperoxid, sowie Dialkyl- oder Diarylperoxide, wie Di-tert.-Butyl- oder DiCumylperoxid eingesetzt werden. Als Azoverbindung finden im Wesentlichen 2,2'-Azobis(isobutyronitril), 2,2'-Azobis(2,4-dimethylvaleronitril) und 2,2'-Azobis(amidinopropyl)dihydrochlorid (AIBA, entspricht V-50 von Wako Chemicals) Verwendung. Selbstverständlich können auch sogenannte Redoxinitiatorensysteme als Radikalinitiatoren eingesetzt werden. Als Oxidationsmittel für Redoxinitiatorsysteme kommen im Wesentlichen die oben genannten Peroxide in Betracht. Als entsprechende Reduktionsmittel können Schwefelverbindungen mit niedriger Oxidationsstufe, wie Alkalisulfite, beispielsweise Kalium- und/oder Natriumsulfit, Alkalihydrogensulfite, beispielsweise Kalium- und/oder Natriumhydrogensulfit, Alkalimetabisulfite, beispielsweise Kalium- und/oder Natriummetabisulfit, Formaldehydsulfoxylate, beispielsweise Kaliumund/oder Natriumformaldehydsulfoxylat, Alkalisalze, speziell Kalium- und/oder Natriumsalze aliphatische Sulfinsäuren und Alkalimetallhydrogensulfide, wie beispielsweise Kalium- und/oder Natriumhydrogensulfid, Salze mehrwertiger Metalle, wie Eisen-(II)-sulfat, Eisen-(II)-Ammoniumsulfat, Eisen-(II)-phosphat, Endiole, wie Dihydroxymaleinsäure, Benzoin und/oder Ascorbinsäure sowie reduzierende Saccharide, wie Sorbose, Glucose, Fructose und/oder Dihydroxyaceton eingesetzt werden.

Neben der saatfreien Herstellungsweise kann zur Einstellung der Polymerteilchengröße die Emulsionspolymerisation zur Herstellung der Polymeren P nach dem Saatlatex-Verfahren oder in Gegenwart einer in situ hergestellten Saatlatex erfolgen. Verfahren hierzu sind dem Fachmann bekannt und können dem Stand der Technik entnommen werden (siehe beispielsweise EP-B 40 419, EP-A 567 812, EP-A 614 922 sowie 'Encyclopedia of Polymer Science and Technology', Vol. 5, Seite 847, John Wiley & Sons Inc., New York, 1966). So empfiehlt der Stand der Technik, beim semikontinuierlichen Zulaufverfahren eine definierte feinteilige Saat-Polymerdispersion im wässrigen Polymerisationsmedium vorzulegen und dann die Monomeren P in Gegenwart der Saatlatex zu polymerisieren. Hierbei wirken die Saat-Polymerteilchen als 'Polymerisationskeime' und entkoppeln die Polymerteilchenbildung und das Polymerteilchenwachstum. Während der Emulsionspolymerisation kann prinzipiell weiterer Saatlatex direkt dem wässrigen Polymerisationsmedium zugegeben werden. Hierdurch werden breite Größenverteilungen der Polymerteilchen erreicht, die insbesondere bei Polymerdispersionen mit hohem Feststoffgehalt oftmals erwünscht sind (vgl. hierzu beispielsweise DE-A 4213965). Anstelle der Zugabe einer definierten Saatlatex kann dieser auch in situ erzeugt werden. Hierzu wird beispielsweise eine Teilmenge der zur Polymerisation eingesetzten Monomeren P und des Radikalinitiators zusammen mit einer Teil- oder der Gesamtmenge des Polymeren A sowie gegebenenfalls zusätzlichen Dispergierhilfsmitteln vorgelegt und auf Reaktionstemperatur erwärmt, wobei eine relativ feinteilige Polymersaat entsteht. Anschließend wird im gleichen wässrigen Polymerisationsmedium die eigentliche Polymerisation nach dem Zulaufverfahren durchgeführt (siehe auch DE-A 4213965).

Vorteilhaft erfolgt die Herstellung der Polymeren P durch radikalisch initiierten wässrigen Emulsionspolymerisation bei einer Reaktionstemperatur im Bereich von 0 bis 170 °C, wobei jedoch Temperaturen von 70 bis 120 °C und insbesondere 80 bis 100 °C besonders bevorzugt sind. Die radikalische wässrige Emulsionspolymerisation kann bei einem Druck kleiner, gleich oder größer 1 atm (absolut) durchgeführt werden. Vorzugsweise werden leichtflüchtige Monomere wie Ethylen, Butadien oder Vinylchlorid unter erhöhtem Druck polymerisiert. Dabei kann der Druck 1,2, 1,5, 2, 5, 10, 15 bar (Überdruck) oder noch höhere Werte einnehmen. Werden Emulsionspolymerisationen im Unterdruck durchgeführt, werden Drücke von 950 mbar, häufig von 900 mbar und oft 850 mbar (absolut) eingestellt. Vorteilhaft wird die radikalische wässrige Emulsionspolymerisation der Monomeren bei Atmosphärendruck (= 1,013 bar absolut) oder unter erhöhtem Druck unter Inertgasatmosphäre, wie beispielsweise unter Stickstoff oder Argon durchgeführt.

Bei der radikalisch initiierten wässrigen Emulsionspolymerisation kann das wässrige Polymerisationsmedium prinzipiell auch in untergeordneten Mengen (< 5 Gew.-%) wasserlösliche organische Lösungsmittel, wie beispielsweise Methanol, Ethanol, Isopropanol, Butanole, Pentanole, aber auch Aceton etc. umfassen. Bevorzugt erfolgt die radikalisch initiierte wässrige Emulsionspolymerisation jedoch in Abwesenheit solcher Lösungsmittel.

Die erfindungsgemäß eingesetzten Polymere P weisen eine Glasübergangstemperatur $Tg^P \geq 20$ °C gemessen nach DIN EN ISO 11357-2 (2013-05) auf. Mit Vorteil liegt die Glasübergangstemperatur der Polymeren P im Bereich ≥ 60

°C, insbesondere im Bereich ≥ 60 und ≤ 150 °C und mit besonderem Vorteil im Bereich ≥ 90 °C, insbesondere im Bereich ≥ 90 und ≤ 120 °C.

Von Bedeutung ist ferner, dass nach Fox (T.G. Fox, Bull. Am. Phys. Soc. 1956 [Ser. II] 1, Seite 123 und gemäß Ullmann's Encyclopädie der technischen Chemie, Bd. 19, Seite 18, 4. Auflage, Verlag Chemie, Weinheim, 1980) die Glasübergangstemperatur von höchstens schwach vernetzten Mischpolymerisaten in guter Näherung nach folgender Gleichung abgeschätzt werden kann

$$1/Tg = x_1/Tg^1 + x_2/Tg^2 + .... x_n/Tg^n,$$

wobei $x_1$, $x_2$, .... $x_n$ die Massenbrüche der Monomeren 1, 2, .... n und $Tg^1$, $Tg^2$, .... $Tg^n$ die Glasübergangstemperaturen der jeweils nur aus einem der Monomeren 1, 2, .... n aufgebauten Homopolymerisaten in Grad Kelvin bedeuten. Die Glasübergangstemperaturen dieser Homopolymerisate der meisten ethylenisch ungesättigten Monomere sind bekannt (bzw. können in einfacher an sich bekannter Weise experimentell ermittelt werden) und beispielsweise in J. Brandrup, E.H. Immergut, Polymer Handbook 1st Ed. J. Wiley, New York, 1966, 2nd Ed. J. Wiley, New York, 1975 und 3rd Ed. J. Wiley, New York, 1989, sowie in Ullmann's Encyclopedia of Industrial Chemistry, Seite 169, Verlag Chemie, Weinheim, 1992, aufgeführt.

Die durch Emulsionspolymerisation zugänglichen wässrigen Polymer P-Dispersionen weisen üblicherweise einen Feststoffgehalt von ≥ 10 und ≤ 70 Gew.-%, häufig ≥ 20 und ≤ 65 Gew.-% und oft ≥ 25 und ≤ 60 Gew.-%, jeweils bezogen auf die wässrige Polymerisatdispersion, auf.

Mit besonderem Vorteil liegen die Polymeren P in Form von Teilchen mit einem mittleren Teilchendurchmesser ≥ 10 und ≤ 1000 nm, vorteilhaft ≥ 30 und ≤ 600 nm und besonders vorteilhaft ≥ 100 bis ≤ 500 nm, bestimmt nach der Methode der quasielastische Lichtstreuung (ISO-Norm 13 321; cumulant z-average), vor.

Erfindungsgemäß liegt das Gewichtsverhältnis von Polymeren P (berechnet als Gesamtmenge an Monomeren P) zu Polymeren A in der bevorzugten Ausführungsform im Bereich ≥ 1 und ≤ 10, vorteilhaft im Bereich ≥ 1,5 und ≤ 8 und insbesondere im Bereich ≥ 2 und ≤ 6.

Das Mischen von faserförmigen Substrat S und thermoplastischem Polymer P erfolgt in einer dem Fachmann geläufigen Art und Weise, beispielsweise in einer Mischtrommel, einem Wirbelbett oder in einer Blowline. Dabei findet die kontinuierlich oder diskontinuierlich betriebene Mischtrommel dann vorteilhaft Verwendung, wenn das Polymer P in Substanz, beispielsweise als Polymerpulver oder als Polymerfasern oder in flüssiger Form, insbesondere als wässrige Dispersion eingesetzt wird. Ein Wirbelbett wird zur Mischung von faserförmigen Substrat S und Polymer P insbesondere dann eingesetzt, wenn das Polymer P in Form von Polymerfasern vorliegt. Eine Blowline findet insbesondere dann Verwendung, wenn das faserförmige Substrat S durch Zerkleinern von Holz in einem Refiner erzeugt wurde und das Polymer P in Form einer wässrigen Dispersion eingesetzt wird.

Von Bedeutung ist jedoch, dass das erfindungsgemäß eingesetzte Substrat S sowohl durch Mischen von separat hergestellten acetylierten und nichtacetylierten lignocellulosehaltigen Fasern, wie auch durch Faserherstellung ausgehend von einem entsprechenden Gemisch aus acetylierten und nichtacetylierten Holz nach dem oben beschriebenen Verfahren erzeugt werden kann.

Von Bedeutung ist ferner, dass die in Verfahrensschritt i) erzeugte Substrat S/Polymer P-Mischung sowohl durch Mischen von Substrat S mit Polymer P, wie auch durch Mischen eines Gemisches aus acetylierten lignocellulosehaltigen Fasern und Polymer P und eines Gemisches aus nichtacetylierten lignocellulosehaltigen Fasern und Polymer P hergestellt werden kann.

Nach dem Mischungsschritt wird die erhaltene Substrat S/Polymer P-Mischung in einen Faserflor überführt, welcher daran anschließend bei einer Temperatur ≥ $Tg^P$ zu einem thermoverformbaren und/oder prägbaren Faser/-Polymer-Komposit verdichtet wird.

Mit Vorteil erfolgt das erfindungsgemäße Verfahren dergestalt, dass das Polymer P in Form einer wässrigen Dispersion eingesetzt wird, wobei im Anschluss an Verfahrensstufe i), während und/oder nach Verfahrensstufe ii) ein Trocknungsschritt erfolgt, beispielsweise in einem Trockenturm oder Wirbelschichttrockner nach Verfahrensstufe i) bzw. mittels eines Warmluftgebläses während oder nach Verfahrensstufe ii).

Mit besonderem Vorteil erfolgt das erfindungsgemäße Verfahren dergestalt, dass

- das Substrat S in einen Gasstrom eingebracht wird [Verfahrensstufe ia)], danach
- das Substrat S im Gasstrom mit einer wässrigen Dispersion eines Polymeren P in Kontakt gebracht und dabei homogen gemischt wird [Verfahrensstufe ib)], danach
- die erhaltene Substrat S/Polymer P-Mischung im Gasstrom getrocknet und anschließend abgeschieden wird [Verfahrensstufe ic)], danach

- die erhaltene abgeschiedene Substrat S/Polymer P-Mischung in einen Faserflor überführt wird [Verfahrensstufe ii)], und danach

- der erhaltene Faserflor bei einer Temperatur ≥ $Tg^P$ zu einem Faser/Polymer-Komposit verdichtet wird [Verfahrensstufe iii)].

Unter einem Gasstrom soll im Rahmen der vorliegenden Erfindung der gerichtete Transport eines gasförmigen Stoffes entlang eines Druckgefälles, beispielsweise in einem Behälter oder in einem Rohr, verstanden werden. Prinzipiell können alle Stoffe eingesetzt werden, welche unter den Transportbedingungen (insbesondere Druck und Temperatur) gasförmig sind. Beispielsweise werden organische und/oder anorganische Lösungsmitteldämpfe, wie insbesondere vorteilhaft Wasserdampf oder stickstoffhaltige Gasgemische, wie insbesondere Luft eingesetzt. Erfindungsgemäß vorteilhaft werden Wasserdampf/Luft-Gemische in breitem Mischungsverhältnis eingesetzt, wie sie insbesondere bei der Holzfaserherstellung in einer Blowline auftreten.

Erfindungsgemäß besonders vorteilhaft wird das Substrat S im Gasstrom mit einer wässrigen Polymer P-Dispersion in Kontakt gebracht. Erfolgt dieses Inkontaktbringen in einer Blowline, vorteilhaft über ein oder mehrere Einspritzdüsen, so ist darauf zu achten, dass das Inkontaktbringen mit der wässrigen Polymer P-Dispersion in der Blowline in Strömungsrichtung an einer Stelle oder mehreren Stellen erfolgt, bevor die aufgeheizte trockene Luft zur Trocknung der Holzfasern eingeblasen wird.

Daran anschließend wird das mit der wässrigen Polymer P-Dispersion in Kontakt gebrachte faserförmige Substrat im Gasstrom fertig getrocknet und anschließend abgeschieden. Die Trocknung der erhaltenen Substrat S/Polymer P-Mischung erfolgt beispielsweise durch Abtrennung und Kondensation des Wasserdampfes oder in einer Blowline durch Einbringen von so viel aufgeheizter trockener Luft, dass die relative Luftfeuchtigkeit im resultierenden Gasgemisch auf ≤ 10 % oder sogar ≤ 5 % abgesenkt wird. Durch diese Maßnahme erfolgt die Trocknung der erhaltenen Substrat S/Polymer P-Mischung. Unter Trocknung soll im Rahmen dieser Schrift verstanden werden, wenn der Restfeuchtegehalt der erhaltenen Substrat S/Polymer P-Mischung auf ≤ 15 Gew.-% und vorteilhaft auf ≤ 10 Gew.-%, bevorzugt auf ≥ 5 und ≤ 10 Gew.-% herabgesetzt wird. Unter Restfeuchtegehalt Substrat S/Polymer P-Mischung soll die prozentuale Gewichtsdifferenz, bezogen auf die eingesetzte Substrat S/Polymer P-Mischung, verstanden werden, welche sich ergibt, wenn man 1 g Substrat S/Polymer P-Mischung im Trockenschrank für eine Stunde bei 120 °C trocknet. Die Abscheidung der getrockneten Substrat S/Polymer P-Mischung erfolgt nach den üblichen Methoden zur Feststoffabscheidung aus Gasgemischen, wie beispielsweise durch Siebe oder durch Ausnutzung von Zentrifugalkräften über Zyklonabscheider.

Daran anschließend wird die erhaltene abgeschiedene Substrat S/Polymer P-Mischung erfindungsgemäß in einen Faserflor überführt, beispielsweise durch entsprechendes Aufstreuen der abgeschiedenen Substrat S/Polymer P-Mischung auf eine Fläche oder im kontinuierlichen Betrieb auf ein Förderband. Dieser Faserflor kann erfindungsgemäß, gegebenenfalls nach einer mechanischen Vorverdichtung bei einer Temperatur deutlich unterhalb der Glasübergangstemperatur $Tg^P$, eine Dicke von ≥ 1 und ≤ 50 cm, vorteilhaft ≥ 1 und ≤ 30 cm und insbesondere vorteilhaft ≥ 1 und ≤ 15 cm und eine Dichte von ≥ 20 und ≤ 700 g/l, oft ≥ 50 und ≤ 500 g/l und häufig ≥ 100 und ≤ 350 g/l aufweisen.

Daran anschließend wird der so erhaltene Faserflor bei einer Temperatur ≥ $Tg^P$ zu einem thermoverformbaren und/oder -prägbaren Faser/Polymer-Komposit verdichtet. Dabei wird unter Verdichtung verstanden, wenn der Faserflor bei einer Temperatur ≥ $Tg^P$ unter Druck zu einem thermoverformbaren und/oder -prägbaren Faser/Polymer-Komposit verpresst wird. Dabei erhöht sich die Dichte des Faser/Polymer-Komposits im Vergleich zum entsprechenden Faserflor, abhängig vom eingesetzten faserförmigen Substrat S, um einen Faktor ≥ 3 und vorteilhaft um einen Faktor ≥ 6. In entsprechender Weise verringert sich auch die Dicke des Faser/Polymer-Komposits im Vergleich zum entsprechenden Faserflor. Von Bedeutung in diesem Zusammenhang ist, dass das erfindungsgemäße Faser/Polymer-Komposit vorteilhaft eine flächenförmige ebene Form aufweist. Selbstverständlich kann das erfindungsgemäße Faser/Polymer-Komposit aber auch - abhängig von der gewählten Pressform - beliebige nichtebene dreidimensionale Formen aufweisen.

Bei der Herstellung des Faser/Polymer-Komposits werden vorteilhaft ≥ 0,1 und ≤ 30 Gew.-% und mit besonderem Vorteil ≥ 1 und ≤ 25 Gew.-% und vorteilhaft ≥ 5 und ≤ 20 Gew.-% an Polymeren P (berechnet als Gesamtmenge an Monomeren P), bezogen auf die Menge an faserförmigen Substrat S eingesetzt.

Nach dem erfindungsgemäßen Verfahren sind insbesondere Faser/Polymer-Komposite zugänglich, deren Flächengewicht ≥ 500 und ≤ 30000 g/$m^2$, insbesondere vorteilhaft ≥ 1000 und ≤ 20000 g/$m^2$ und mit Vorteil ≥ 1000 und ≤ 10000 g/$m^2$ aufweisen. Dabei sind die nach dem erfindungsgemäßen Verfahren erhältlichen thermoverformbaren und/oder -prägbaren Faser/Polymer-Komposite in einer bevorzugten Ausführungsform flächenförmig eben während sie in einer weiteren bevorzugten Ausführungsform eine nicht-flächenförmige dreidimensionale Struktur aufweisen.

Erfindungsgemäß umfasst sind demnach auch die thermoverformbaren und/oder -prägbaren Faser/Polymer-Komposite, wie sie nach dem erfindungsgemäßen Verfahren erhältlich sind.

In entsprechender Weise ist auch die Verwendung eines erfindungsgemäßen Faser/Polymer-Komposits zur Herstellung eines Faser/Polymer-Formteils erfindungsgemäß umfasst, welches sich in seiner Form und/oder Oberflächenstruktur vom eingesetzten thermoverformbaren und/oder -prägbaren Faser/Polymer-Komposit unterscheidet.

Dementsprechend ist erfindungsgemäß auch ein Verfahren zur Herstellung eines Faser/Polymer-Formteils umfasst, welches dadurch gekennzeichnet ist, dass ein erfindungsgemäßes thermoverformbares und/oder -prägbares Faser/Polymer-Komposit auf eine Temperatur ≥ $Tg^P$ aufgeheizt wird, das so erhaltene Faser/Polymer-Komposit bei einer Temperatur ≥ $Tg^P$ in die gewünschte Form und/oder Oberflächenstruktur des Faser/Polymer-Formteils gebracht wird und danach das erhaltene Faser/Polymer-Formteil unter Beibehaltung seiner Form und/oder Oberflächenstruktur auf eine Temperatur < $Tg^P$ abgekühlt wird.

Erfindungsgemäß erfolgt das Aufheizen des Faser/Polymer-Komposits auf eine Temperatur, welche wenigstens der Glasübergangstemperatur $Tg^P$ des Polymeren P entspricht. Mit Vorteil wird das Faser/Polymer-Komposit auf eine Temperatur $Tg^P$ plus ≥ 10 °C und mit besonderem Vorteil $Tg^P$ plus ≥ 30 °C aufgeheizt und das erhaltene Faser/Polymer-Formteil auf eine Temperatur $Tg^P$ minus ≥ 10 °C und mit besonderem Vorteil $Tg^P$ minus ≥ 30 °C abgekühlt.

Von Bedeutung ist ferner, dass die Herstellung des Faser/Polymer-Formteils in einer bevorzugten Ausführungsform mittels einer beheizten Formpresse erfolgt, deren wenigstens eine Kontaktfläche eine Temperatur ≥ $Tg^P$ sowie ggf. eine definierte Oberflächenstruktur (d.h. einem aus der Kontaktfläche herausragenden und/oder hineinragenden Muster) aufweist und deren Form der negativen Form des Faser/Polymer-Formteils entspricht und dessen Abkühlung außerhalb der Formpresse erfolgt. Aufheizvorgang und Verformungsvorgang erfolgen in dieser Ausführungsform in der beheizten Formpresse. Selbstverständlich ist es erfindungsgemäß auch möglich, dass das Faser/Polymer-Komposit außerhalb der Formpresse auf eine Temperatur ≥ $Tg^P$ aufgeheizt und anschließend in der Formpresse ohne weitere Heizung zu den Faser/Polymer-Formteil verformt und dabei auf eine Temperatur < $Tg^P$ abgekühlt wird. In dieser bevorzugten Ausführungsform erfolgt der Aufheiz- und der Verformungs/Abkühlvorgang separat.

In einer weiteren bevorzugten Ausführungsform erfolgt der Aufheizvorgang des Faser/Polymer-Komposits mittels Durchleiten zwischen zwei achsenparallel angeordneten und in Durchleitrichtung rotierenden Metallwalzen, wobei

a) wenigstens eine der Metallwalzen eine definierte Oberflächenstruktur der Kontaktfläche zum Faser/Polymer-Komposit sowie eine Temperatur ≥ $Tg^P$ aufweist,
b) der Spalt zwischen den Kontaktflächen der beiden Metallwalzen kleiner als die Dicke des Faser/Polymer-Komposits ist, und
c) das Durchleiten des Faser/Polymer-Komposits zwischen den Kontaktflächen der beiden Metallwalzen mit der Geschwindigkeit erfolgt, welche der Rotationsgeschwindigkeit der Kontaktflächen der beiden Metallwalzen entspricht.

Dabei ist es für den Fachmann selbsterläuternd, dass die definierte Oberflächenstruktur der Kontaktfläche der wenigstens einen Metallwalze dem Negativ der auf dem Faser/Polymer-Formteil ausgebildeten Oberflächenstruktur darstellt. Auch ist es selbsterläuternd, dass die Differenz zwischen der Dicke des Faser/Polymer-Komposits und dem Spalt zwischen den Kontaktflächen der beiden Metallwalzen der maximalen Tiefe der auf dem Faser/Polymer-Formteil ausgebildeten positiven Oberflächenstruktur entspricht. In der vorliegenden Ausführungsform entspricht die Spaltbreite vorteilhaft der Dicke des Faser/Polymer-Komposits multipliziert mit einem Faktor ≤ 0,98, besonders vorteilhaft mit einem Faktor ≤ 0,9 und insbesondere vorteilhaft mit einem Faktor ≤ 0,8. Damit sich die positiven Oberflächenstrukturen auf dem Faser/Polymer-Formteil optimal ausbilden können ist es zwingend, dass das Durchleiten des Faser/Polymer-Komposits zwischen den Kontaktflächen der beiden Metallwalzen mit der Geschwindigkeit (in m/sec) erfolgt, welche der Rotationsgeschwindigkeit der Kontaktflächen (in m/sec) der beiden Metallwalzen entspricht. Diese Ausführungsform eignet sich insbesondere zur Herstellung von flächenförmig ebenen Faser/Polymer-Formteilen, welche eine geprägte Oberflächenstruktur aufweisen.

Die Dicke des Faser/Polymer-Komposits vor dem Aufheizvorgang liegt in der Regel im Bereich ≥ 1 mm und ≤ 10 cm, häufig im Bereich ≥ 1 mm und ≤ 3 cm und oft im Bereich ≥ 1 mm und ≤ 1 cm.

In einer weiteren vorteilhaften Ausführungsform erfolgt das erfindungsgemäße Verfahren dergestalt, dass vor oder nach dem Aufheizvorgang aber vor dem Verformungsschritt noch ein Verfahrenszwischenschritt durchgeführt wird, in welchem auf die eine und/oder die andere Oberfläche des Faser/Polymer-Komposits ein flächenförmiges Dekormaterial mit einer Dicke ≤ 10 mm aufgebracht wird.

Beim dem erfindungsgemäß einsetzbaren Dekormaterial handelt es sich vorteilhaft um ein textiles Flächengebilde, wie beispielsweise ein Vliesstoff, ein Gewebe oder ein Gewirke aus natürlichen oder synthetischen Fasern, eine Kunststofffolie, wie beispielsweise eine thermoplastische Polyvinylchlorid-, Polyolefin- oder Polyesterfolie, ein hochharzgefülltes Papier, wie insbesondere ein sogenannter Melaminharzfilm, ein sogenanntes High Pressure Laminate (HPL) oder ein sogenanntes Continuous Pressure Laminate (CPL), ein Dekorpapier, ein Holzfurnier oder ein geschäumtes Flächengebilde, wie beispielsweise ein Flächengebilde aus einem Polyolefin- oder einem Polyurethanschaum, ein geschäumtes Flächengebilde, welches seinerseits auf der nicht mit dem aufgeheizten Faser/Polymer-Komposit in Kontakt kommenden Oberfläche mit einem textilen Flächengebilde, einer Kunststofffolie oder einem weiteren geschäumten Flächengebilde beschichtet (kaschiert) ist.

Das flächenförmige Dekormaterial weist in der Regel eine Dicke ≤ 10 mm auf. Handelt es sich bei dem

flächenförmigen Dekormaterial um ein textiles Flächengebilde oder eine Kunststofffolie, so beträgt deren Dicke in der Regel ≤ 3 mm, häufig vorteilhaft ≤ 2 mm und häufig insbesondere vorteilhaft ≤ 1 mm. Handelt es sich jedoch bei dem flächenförmigen Dekormaterial um ein geschäumtes Flächengebilde oder ein beschichtetes (kaschiertes) geschäumtes Flächengebilde, so beträgt deren Dicke häufig ≤ 8 mm, oft ≤ 5 mm und besonders oft ≤ 3 mm. Handelt es sich bei dem flächenförmigen Dekormaterial jedoch um ein Holzfurnier, so beträgt dessen Dicke in der Regel ≤ 3 mm, häufig vorteilhaft ≤ 2 mm und häufig insbesondere vorteilhaft ≤ 1 mm.

Erfindungsgemäß sind daher auch die nach vorgenanntem Verfahren zugänglichen Faser/Polymer-Formteile umfasst.

Erfindungsgemäß ist ferner von Bedeutung, dass sowohl das Verfahren zur Herstellung des thermoverformbaren und/oder -prägbaren Faser/Polymer-Komposits, wie auch das Verfahren zur Herstellung des Faser/Polymer-Formteils kontinuierlich oder diskontinuierlich erfolgen können.

Von Bedeutung ist ferner, dass sich bei einem Faser/Polymer-Formteil (selbstverständlich auch bei dem entsprechenden Faser/Polymer-Komposit) in Abhängigkeit von der Art und Menge des Substrates S sowie der Art und Menge des Polymeren P bei einem gegebenen Flächengewicht die aus dem in Kontakt mit Wasser resultierende Dickenquellung in einem definierten Bereich einstellen lässt. Dabei ergibt sich der Maximalwert der Dickenquellung, wenn man bei einer gegebenen Art und Menge des Polymeren P und einem gegebenen Flächengewicht ein Faser/Polymer-Formteil (Faser/Polymer-Komposit) unter Verwendung einer gegebenen Art und Menge eines Substrates S völlig ohne acetylierte Fasern herstellt und davon die Dickenquellung bestimmt. Wird nun in einem zweiten Versuch ein analoges Faser/Polymer-Formteil (Faser/Polymer-Komposit) unter identischen Bedingungen hergestellt, wobei die Gesamtmenge des Substrates S ausschließlich aus den entsprechenden acetylierten Fasern besteht und von diesem die Dickenquellung bestimmt, so erhält man den möglichen Minimalwert der Dickenquellung. Durch den entsprechenden Anteil an acetylierten Fasern im Substrat S lässt sich nun bei einer gegebenen Art und Menge eines Polymeren P, einer gegebenen Art und Menge eines Substrates S und einem gegebenen Flächengewicht die Dickenquellung zwischen Minimal- und Maximalwert gezielt einstellen.

Die erfindungsgemäß zugänglichen Faser/Polymer-Formteile weisen eine gute Thermodimensionsstabilität sowie eine verbesserte Wasserbeständigkeit auf und eigenen sich daher vorteilhaft als Bauelement im Fahrzeugbau, wie beispielsweise als Türinsert, Türdekorträger, Kniefänger, Handschuhfach, Hutablage, Sonnenblende, Mittelkonsole, Kofferraumverkleidung oder Sitzrückenverkleidung, in Bauwerken, beispielsweise als Dachziegel oder Fußbodenelement, insbesondere Klick-Laminat, Raumteiler, Trennwand, Deckenplatte, Türblatt oder Wanddekorteil und in Möbeln als Möbelformteil, wie beispielsweise als Sitz- oder Rückenfläche. Die Verwendung der Faser/Polymer-Formteile als Bauelement im Fahrzeugbau, in Bauwerken und in Möbeln ist daher erfindungsgemäß bevorzugt.

Die vorliegende Erfindung soll durch nachfolgende nichteinschränkende Beispiele erläutert werden.

Beispiele

Herstellung einer wässrigen Polymer P1-Dispersion (Dispersion 1)

In einem 500 l-Technikumsreaktor, ausgerüstet mit einem Rührer, einem Rückflusskühler und Dosiereinrichtungen wurden bei 20 bis 25 °C (Raumtemperatur) und unter Stickstoffatmosphäre 36,5 kg entionisiertes Wasser vorgelegt und bei Atmosphärendruck (1 atm = 1,013 bar absolut) unter Rühren auf 95 °C aufgeheizt. Nach Erreichen dieser Temperatur wurden innerhalb von 10 Minuten 14,0 kg einer 7 gew.-%igen wässrigen Lösung von Natriumpersulfat kontinuierlich unter Rühren zudosiert. Anschließend wurden, jeweils gleichzeitig beginnend, eine Mischung aus 61,6 kg Acrylsäure, 3,2 kg Methylmethacrylat und 40,5 kg entionisiertem Wasser innerhalb von 70 Minuten, sowie eine Mischung aus 14,0 kg einer 40 gew.-%igen wässrigen Lösung Natriumhydrogensulfit und 1,4 kg entionisiertem Wasser ebenfalls innerhalb von 70 Minuten und 32,5 kg einer 7 gew.-%igen wässrigen Lösung von Natriumpersulfat innerhalb von 75 Minuten kontinuierlich mit gleichbleibenden Mengenströmen unter Rühren und unter Aufrechterhaltung der vorgenannten Temperatur dem Reaktionsgefäß zudosiert. Anschließend wurde das Polymerisationsgemisch weitere 5 Minuten gerührt und dann auf 93 °C abgekühlt. Danach wurden unter Rühren innerhalb von 10 Minuten 13,9 kg 25 gew.-%ige Natronlauge zudosiert und damit ein pH-Wert von 3,3 eingestellt, gefolgt von weiteren 5 Minuten Rühren. Anschließend wurde Zulauf 1 innerhalb von 170 Minuten zudosiert, wobei zuerst 48 Gew.-% von Zulauf 1 innerhalb von 20 Minuten und dann 52 Gew.-% von Zulauf 1 innerhalb von 150 Minuten zugegeben wurden - jeweils kontinuierlich mit gleichbleibendem Mengenströmen. Zulauf 1 bestand aus 21,8 kg einer 7 gew.-%igen wässrigen Lösung aus Natriumpersulfat. 5 Minuten nach Start von Zulauf 1 wurde Zulauf 2 innerhalb von 150 Minuten kontinuierlich mit gleichbleibendem Mengenstrom unter Beibehaltung der vorgenannten Polymerisationstemperatur zudosiert. Zulauf 2 bestand aus einer homogenen Emulsion, hergestellt aus 28,4 kg entionisiertem Wasser, 3,86 kg einer 28 gew.-%igen wässrigen Lösung von Natriumlaurylethersulfat (Disponil® FES 27; Produkt der Fa. BASF SE), 2,88 kg einer 15 gew.-%igen wässrigen Lösung von Natriumdodecylsulfat (Disponil® SDS 15; Produkt der Fa. BASF SE), 4,54 kg Glycidylmethacrylat, 1,06 kg 1,4-Butandioldiacrylat, 57,00 g Methylmethacrylat, 86,48 kg Styrol und 2,12 kg Acrylsäure. Nach beendeter Zugabe von Zulauf 1 wurde noch 10 Minuten weiter

gerührt. Anschließend wurden 108 g eines Entschäumers (TEGO® Foamex 822; Produkt der Fa. Evonik Resource Efficiency GmbH) zugegeben. Danach wurde das Polymerisationsgemisch auf 90 °C abgekühlt und die Zuläufe 3 und 4 gleichzeitig beginnend kontinuierlich mit gleichbleibenden Mengenströmen innerhalb von 30 Minuten zugegeben. Zulauf 3 bestand aus 650 g einer 10 gew.-%igen wässrigen Lösung von tert.-Butylhydroperoxid und Zulauf 4 bestand aus 820 g einer 13,1 gew.-%igen wässrigen Lösung von Acetonbisulfit (molares 1:1-Additionsprodukt aus Aceton und Natriumhydrogensulfit). Danach wurde das erhaltene Polymerisationsgemisch auf Raumtemperatur abgekühlt und über einen 125 µm-Filter filtriert. Die erhaltene wässrige Polymerisatdispersion wies einen Feststoffgehalt von 53,5 Gew.-% sowie einen pH-Wert von 3,5 auf. Die zahlenmittlere Teilchengröße wurde zu 347 nm und die Glasübergangstemperatur zu 103 °C bestimmt.

Der Feststoffgehalt wurde generell mit einem Feuchtebestimmer der Firma Mettler Toledo durch Trockung von 0,5 bis 1 g einer erhaltenen Polymerisatdispersion oder Polymerisatlösung bei 140 °C bis zur Gewichtskonstanz bestimmt.

Die Glasübergangstemperatur wurde generell mit Hilfe eines Differentialkalorimeters Q 2000 der Firma TA Instruments gemäß DIN EN ISO 11357-2 (2013-05) bestimmt. Die Heizrate betrug 10 K pro Minute.

Die zahlenmittlere Teilchengröße der Dispersionsteilchen wurde generell durch dynamische Lichtstreuung an einer 0,005 bis 0,01 gew.-%igen wässrigen Dispersion bei 23 °C mittels des Autosizers IIC der Firma Malvern Instruments, England, ermittelt. Angegeben wird der mittlere Durchmesser der Kumulantenauswertung (cumulant z-average) der gemessenen Autokorrelationsfunktion (ISO-Norm 13321).

Die pH-Werte wurden generell durch Messung einer Probe mit einer pH-Elektrode der Firma Schott bei Raumtemperatur bestimmt.

Anwendungstechnische Untersuchungen

Zur Herstellung der lignocellulosehaltigen Fasern wurden Hackschnitzel von Fichtenholz und von acetyliertem Kiefernholz (Accoya®-Holz der Firma Accsys Technologies Plc) eingesetzt.

Die Versuche wurden mit einem 12 Zoll-Refiner der Firma Andtriz und einer damit verbundenen Blowline durchgeführt. Dabei wurde der Refiner bei 160 bis 170 °C und einem Innendruck von 5 bis 6 bar (Überdruck) betrieben. Der Abstand zwischen den beiden Mahlplatten betrug 0,3 mm, wobei eine der Mahlplatten mit 3000 Umdrehungen pro Minute betrieben wurde. Die mit dem Refiner über einen Flansch verbundene Blowline (Stahlrohr) wies einen Innendurchmesser von 3 cm und eine Rohrlänge von 30 m auf. Über eine 0,2 mm Düse, die sich in einem Abstand von 50 cm vom Refinerausgang / Blowlineeingang in der Blowline befand, wurde dann die wässrige Dispersion 1 mit 2 bar (Überdruck) in die Blowline eingedüst. Am Ende der Blowline befand sich ein Zyklonabscheider, über den die beschichteten Holzfasern weiter getrocknet und auf eine Temperatur von ca. 80 °C abgekühlt und in einen offenen Behälter abgeschieden wurden. Daran anschließend wurden die jeweils erhaltenen Fasern für 24 Stunden in einem Klimaraum bei 23 °C und 50 % relativer Luftfeuchtigkeit gelagert.

Zur Herstellung wurden die jeweiligen Holzhackschnitzel zuerst in 160 bis 170 °C heißem Wasser/Dampf bei 5 bis 6 bar (Überdruck) in einem sogenannten Kocher vorbehandelt, diese dann in den Refiner überführt, wobei der Massenstrom an Holzhackschnitzeln in den Refiner (bzw. Holzfasern in die Blowline) jeweils auf 30 kg pro Stunde eingestellt wurde. Parallel wurden pro Stunde 9,9 kg Dispersion 1 (entsprechend 5,3 kg/h Feststoff) mittels einer Exzenterschneckenpumpe mit einem Druck von 2 bar (Überdruck) über die 0,2 mm Düse kontinuierlich in die Blowline eingedüst. Die jeweiligen Versuche erfolgten über 2 Stunden im kontinuierlich stationären Zustand, wobei die jeweiligen Holzfasern erhalten wurden, welche 17,7 Gew-% an Bindemittel (fest) enthielten. Die so jeweils erhaltenen beschichteten Fasern wurden für wenigstens 24 Stunden in einem Klimaraum bei 23 °C und 50 % relativer Luftfeuchtigkeit gelagert. Die erhaltenen Faser/Bindemittel-Kombinationen werden im Folgenden in Abhängigkeit von den eingesetzten Holzhackschnitzeln im Fall der Holzhackschnitzel aus acetyliertem Kiefernholz als AKB-Fasern, und im Fall der Holzhackschnitzel aus Fichteholz, als FB-Fasern bezeichnet.

Untersuchung der mechanischen Eigenschaften

Mit den aus der Blowline gemäß der vorgenannten Versuchsdurchführung erhaltenen beschichteten AKB-Fasern und FB-Fasern wurden mittels eines Lödige-Feststoffmischers des Typs FM130D homogene AKB-/FB-Fasermischungen hergestellt. In Abhängigkeit vom Gewichtsanteil der AKB-Fasern in den AKB-/FB-Fasermischungen werden diese im Folgenden als AKB25-Fasern (bei einem Gewichtsanteil von 25 Gew.-% an AKB-Fasern), als AKB50-Fasern (bei einem Gewichtsanteil von 50 Gew.-% an AKB-Fasern) und als AKB75-Fasern (bei einem Gewichtsanteil von 75 Gew.-% an AKB-Fasern) bezeichnet.

Mit den vorgenannten AKB-, FB- sowie AKB25-, AKB50- und AKB75-Fasern wurden 51x51cm-Faserplatten mit einer Dicke von 4,5 mm und einer Dichte von 0,7 $g/cm^3$ hergestellt. Hierzu wurden 820 g der vorgenannten Fasern bzw. homogenen Fasermischungen gleichmäßig in einen waagrecht stehenden Holzrahmen mit den Innenmaßen 51x51x30

cm (L/B/H) eingestreut. Daran anschließend wurde auf den im Holzrahmen befindlichen Faserflor waagrecht eine 51x51 cm-Holzplatte gelegt und dieser mit einem mittigen Stempel auf eine Höhe von 10 cm vorverdichtet. Der so erhaltene Faserkuchen wurde anschließend aus dem Holzrahmen genommen, auf beiden quadratischen Flächen mit einem Trennpapier abgedeckt und zwischen zwei 10 mm dicken waagrechten Trennblechen bei 200 °C unter Druck mit einer Pressrate von 1 Millimeter pro 10 Sekunden auf eine Dicke von 4,5 mm verdichtet, wobei jeweils die untere Seite des Faserkuchens auf die untere waagrechte Trennplatte gelegt wurde. Daran anschließend ließ man die jeweils erhaltenen Faserplatten außerhalb der Druckpresse auf Raumtemperatur abkühlen. Die jeweils erhaltenen Faserplatten wurden anschließend für eine Woche in einem Klimaraum bei 23 °C und 50 % relativer Luftfeuchtigkeit gelagert. Die so erhaltenen Faserplatten werden in Abhängigkeit von den eingesetzten Fasern als AKB-, FB- sowie AKB25-, AKB50- und AKB75-Faserplatten bezeichnet.

Nach der Lagerung der vorgenannten Faserplatten im Klimaraum wurden von diesen Restfeuchtigkeit bestimmt. Dabei erfolgte die Bestimmung der Restfeuchtigkeit dergestalt, dass eine Probe der jeweiligen Faserplatte (ca. 0,5 g) auf einem Restfeuchtemessgerät der Firma Satorius, Modell Feststoffwaage MA 100, bei 120 °C bis zur Gewichtskonstanz erhitzt wurde. Dabei ergibt sich der Feuchtegehalt als Differenz der jeweiligen Probe vor und nach dem Erhitzungsvorgang, jeweils bezogen auf die jeweilige Probe vor dem Erhitzungsvorgang. Die Restfeuchtegehaltsbestimmungen erfolgten jeweils an zwei separaten Proben. Die in Tabelle 1 angegebenen Werte entsprechen den Mittelwerten dieser Bestimmungen.

Tabelle 1: Restfeuchtegehalte der Faserplatten

| Faserplatte | Restfeuchtegehalt [in Gew.-%] |
|---|---|
| FB | 8,3 |
| AKB25 | 4,4 |
| AKB50 | 3,8 |
| AKB75 | 3,3 |
| AKB | 2.8 |

In einem zweiten Verdichtungsvorgang wurden die vorgenannten Faserplatten in einer Heizpresse bei 160 °C innerhalb von 60 Sekunden auf eine Dicke von 3,5 mm, entsprechend einer Dichte von 0,9 g/cm$^3$, verpresst, wobei unter Zuhilfenahme eines Prägebleches jeweils eine scharfkantige Gravur mit einer Tiefe von 0,1 bis 1,0 mm eingeprägt wurde.

Von den nach dieser Nachverdichtung erhaltenen Faserplatten wurde visuell das Prägebild beurteilt sowie die Wasseraufnahme und Dickenquellung bestimmt.

Die Beurteilung der Prägbarkeit erfolgte dabei dergestalt, dass von den jeweils erhaltenen Faserplatten 24 Stunden nach ihrer Herstellung die Kanten der Prägung mittels einer Lupe (mit 12-facher Vergrößerung) visuell beurteilt wurden. Dabei wurde die Prägbarkeit als gut (+) bewertet, wenn die Kanten der Prägungen keinerlei sichtbar abstehende bzw. lose Fasern [= Rauigkeit] aufwiesen. Wiesen die Kanten der Prägungen dagegen sichtbare abstehende bzw. lose Fasern auf, so wurde die Prägbarkeit als unzureichend (-) bewertet. Die entsprechenden Ergebnisse sind in Tabelle 2 aufgelistet.

Die Bestimmung der Wasseraufnahme und der Dickenquellung erfolgte dergestalt, dass von den Faserplatten entsprechende 5 x 5 cm-Prüfkörper ausgesägt und diese dann genau gewogen und deren Dicken exakt bestimmt wurden. Daran anschließend wurden diese Prüfkörper für 24 Stunden waagrecht in 23 °C aufweisenden entionisiertem Wasser gelagert, wobei die jeweiligen Prüfkörper vollständig von Wasser umgeben waren, daran anschließend mit einem Baumwolltuch trocken getupft und dann gewogen bzw. die Dicke der einzelnen Prüfkörper bestimmt. Dabei bestimmte man die Wasseraufnahme (in Gew.-%) aus der Gewichtsdifferenz der Prüfkörper nach und vor der Wasserlagerung multipliziert mit 100, dividiert durch das jeweilige Gewicht vor der Wasserlagerung. In entsprechender Weise wurde auch die Dickenquellung aus der Differenz der Dicke der Prüfkörper nach und vor der Wasserlagerung multipliziert mit 100, dividiert durch die Dicke der Prüfkörper vor der Wasserlagerung bestimmt. Von jeder Faserplatte wurden 5 Prüfköper hergestellt und zu den Prüfungen herangezogen. Die nachfolgend angegebenen Prüfwerte stellen dabei die Mittelwerte dieser 5 Messungen dar. Dabei ist die Wasserbeständigkeit umso besser zu bewerten, je niedriger die Wasseraufnahme und je niedriger die Dickenquellung ist. Die dabei für die jeweiligen Prüfkörper erhaltenen Ergebnisse sind ebenfalls in Tabelle 2 aufgelistet.

Tabelle 2: Ergebnisse der Prägbarkeit, der Wasseraufnahme und der Dickenquellung

| Prüfkörper | Wasseraufnahme [in Gew.-%] | Dickenquellung [in %] | Prägbarkeit |
|---|---|---|---|
| FB | 137 | 68 | + |
| AKB25 | 108 | 51 | + |

(fortgesetzt)

| Prüfkörper | Wasseraufnahme [in Gew.-%] | Dickenquellung [in %] | Prägbarkeit |
|---|---|---|---|
| AKB50 | 92 | 37 | + |
| AKB75 | 63 | 25 | + |
| AKB | 45 | 9 | + |

Von Bedeutung in diesem Zusammenhang ist, dass in mehreren Vorversuchen identische FB-Faserplatten hergestellt wurden, deren Restfeuchtegehalte - bei jeweils gleicher Bindemittelmenge - jedoch gezielt im Bereich von 3 bis 10 Gew.-% eingestellt wurden. Diese FB-Faserplatten wurden in einem zweiten Verdichtungsvorgang ebenfalls - wie oben beschrieben - in einer Heizpresse bei 160 °C auf eine Dicke von 3,5 mm verpresst und entsprechend geprägt. Bei der Beurteilung der entsprechenden Prägungen zeigte sich jedoch, dass lediglich FB-Faserplatten, welche aus FB-Faserplatten mit einem Restfeuchtegehalt von > 5 Gew.-%, wie beispielsweise 5,5 Gew.-% oder 8,3 Gew.-% erhalten wurden, eine gute Prägbarkeit aufwiesen. FB-Faserplatten, welche aus FB-Faserplatten mit einem Restfeuchtegehalt ≤ 5 Gew.-%, wie beispielsweise 4,5 Gew.-% oder 3,3 Gew.-% hergestellt wurden, wiesen generell eine unzureichende Prägbarkeit auf. Dies rührte daher, dass entweder schon unmittelbar nach dem Prägevorgang die entsprechenden Prägungen durch abgerundete Kanten und/oder Nichterreichen der Prägungstiefe unzureichend bzw. nicht vollständig ausgebildet waren oder sich die anfänglich scheinbar gelungenen Prägungen innerhalb weniger Stunden wieder zurückbildeten und somit durch ebenfalls abgerundete Kanten und/oder mangelnde Prägungstiefen unscharfe (‚verwaschene') völlig unzureichende Prägungsbilder lieferten.

Vor diesem Hintergrund war es für den Fachmann völlig überraschend, dass sich Faser/Polymer-Komposite, welche acetylierte lignocellulosehaltige Fasern umfassen und welche Restfeuchtegehalte von ≤ 5 Gew.-% aufwiesen, nicht nur vorteilhaft in Faser/Polymer-Formteile überführen lassen, deren Wasseraufnahme und/oder deren Dickenquellung in einem gegebenen Rahmen gezielt einstellbar sind, sondern sich auch gut verformen bzw. vorteilhaft prägen lassen.

## Patentansprüche

1. Verfahren zur Herstellung eines thermoverformbaren und/oder -prägbaren Faser/Polymer-Komposits unter Verwendung eines faserförmigen lignocellulosehaltigen Substrates S und eines Polymeren P, **dadurch gekennzeichnet, dass**

    i) das Substrat S und das Polymer P homogen gemischt werden, danach
    ii) die Substrat S/Polymer P-Mischung in einen Faserflor überführt wird, und danach
    iii) der erhaltene Faserflor bei einer Temperatur größer oder gleich der Glasübergangstemperatur des Polymeren P [$Tg^P$] zu einem thermoverformbaren und/oder -prägbaren Faser/Polymer-Komposit verdichtet wird,

    wobei

    a) das Substrat S acetylierte lignocellulosehaltige Fasern umfasst, und
    b) das Polymer P thermoplastisch ist und eine $Tg^P \geq 20$ °C gemessen nach DIN EN ISO 11357-2 (2013-05) aufweist und in Form einer wässrigen Dispersion eingesetzt wird, wobei im Anschluss an Verfahrensstufe i), während und/oder nach Verfahrensstufe ii) ein Trocknungsschritt erfolgt, und
    wobei unter faserförmigen lignocellulosehaltigen Substrat solche Partikel verstanden werden, welche im Wesentlichen aus Lignocellulose aufgebaut sind und deren Verhältnis von ihrer längsten Ausdehnung zu ihrer kürzesten Ausdehnung wenigstens ≥ 5 und deren kürzeste Ausdehnung ≤ 2 mm beträgt, wobei die kürzeste Ausdehnung in einem Winkel von 90 ° zur Verbindungslinie ihrer längsten Ausdehnung bestimmt wird und wobei ≥ 0,1 und ≤ 30 Gew.-% an Polymeren P, bezogen auf die Menge an faserförmigen Substrat S eingesetzt werden und
    wobei sich die Dichte des Faser/Polymer-Komposits im Vergleich zum entsprechenden Faserflor um einen Faktor ≥ 3 erhöht.

2. Verfahren nach Anspruch 1, **dadurch gekennzeichnet, dass** die wässrige Dispersion des Polymers P durch radikalische initiierte Emulsionspolymerisation von ethylenisch ungesättigten Monomeren P [Monomere P] in einem wässrigen Medium in Gegenwart eines Polymeren A erhalten wurde, wobei das Polymer A aus

a) 80 bis 100 Gew.-% wenigstens einer ethylenisch ungesättigten Monound/oder Dicarbonsäure [Monomere A1] und

b) 0 bis 20 Gew.-% wenigstens eines weiteren ethylenisch ungesättigten Monomeren, welches sich von den Monomeren A1 unterscheidet [Monomere A2], in einpolymerisierter Form aufgebaut ist,

und wobei die Monomeren P in Art und Menge so gewählt werden, dass das erhaltene Polymer P eine $Tg^P \geq 20$ °C aufweist.

**3.** Verfahren nach Anspruch 1 oder 2, **dadurch gekennzeichnet, dass**

- das Substrat S in einen Gasstrom eingebracht wird [Verfahrensstufe ia)], danach
- das Substrat S im Gasstrom mit einer wässrigen Dispersion eines Polymeren P in Kontakt gebracht und dabei homogen gemischt wird [Verfahrensstufe ib)], danach
- die erhaltene Substrat S/Polymer P-Mischung im Gasstrom getrocknet und anschließend abgeschieden wird [Verfahrensstufe ic)], danach
- die erhaltene abgeschiedene Substrat S/Polymer P-Mischung in einen Faserflor überführt wird [Verfahrensstufe ii)] , und danach
- der erhaltene Faserflor bei einer Temperatur $\geq Tg^P$ zu einem Faser/Polymer-Komposit verdichtet wird [Verfahrensstufe iii)].

**4.** Verfahren nach Anspruch 2 oder 3, **dadurch gekennzeichnet, dass** das Gewichtsverhältnis von Polymer P zu Polymer A $\geq 1$ und $\leq 10$ ist.

**5.** Verfahren nach einem der Ansprüche 2 bis 4, **dadurch gekennzeichnet, dass** das Polymer A ein zahlenmittleres Molekulargewicht $\geq 1000$ und $\leq 30000$ g/mol aufweist.

**6.** Verfahren nach einem der Ansprüche 1 bis 5, **dadurch gekennzeichnet, dass** zur Herstellung des Polymeren P

| | |
|---|---|
| ≥ 90 und ≤ 99,9 Gew.-% | Styrol und/oder Methylmethacrylat, |
| ≥ 0 und ≤ 9,9 Gew.-% | n-Butylacrylat und/oder 2-Ethylhexylacrylat, und |
| ≥ 0,1 und ≤ 10,0 Gew.-% | Acrylsäure, Methacrylsäure, Glycidylacrylat, Glycidylmethacrylat, n-Hydroxyethyl- und n-Hydroxypropylacrylat und -methacrylat, n-Aminoethyl-und n-Aminopropylacrylat und -methacrylat, 1,4-Butylenglykoldiacrylat und -methacrylat, 1,2-, 1,3-und 1,4-Divinylbenzol, Allylacrylat und/oder Allylmethacrylat |

eingesetzt werden, wobei sich die Mengen zu 100 Gew.-% aufsummieren.

**7.** Verfahren nach einem der Ansprüche 1 bis 6, **dadurch gekennzeichnet, dass** das Substrat S ≥ 50 Gew.-% an acetylierten lignocellulosehaltigen Fasern enthält.

**8.** Verfahren nach einem der Ansprüche 1 bis 7, **dadurch gekennzeichnet, dass** das Substrat S zu 100 Gew.-% aus acetylierten lignocellulosehaltigen Fasern besteht.

**9.** Verfahren nach einem der Ansprüche 1 bis 8, **dadurch gekennzeichnet, dass** das erhaltene Faser/Polymer-Komposit flächenförmig ist und ein Flächengewicht ≥ 500 und ≤ 30000 $g/m^2$ aufweist.

**10.** Faser/Polymer-Komposit erhältlich nach einem Verfahren gemäß einem der Ansprüche 1 bis 9.

**11.** Verwendung eines Faser/Polymer-Komposits gemäß Anspruch 10 zur Herstellung eines Faser/Polymer-Formteils, welches sich in seiner Form und/oder Oberflächenstruktur vom eingesetzten Faser/Polymer-Komposit unterscheidet.

**12.** Verfahren zur Herstellung eines Faser/Polymer-Formteils, **dadurch gekennzeichnet, dass** ein thermoverformbares

und/oder -prägbares Faser/Polymer-Komposit gemäß Anspruch 10 auf eine Temperatur ≥ $Tg^P$ aufgeheizt wird, das so erhaltene Faser/Polymer-Komposit bei einer Temperatur ≥ $Tg^P$ in die gewünschte Form und/oder Oberflächenstruktur des Faser/Polymer-Formteils gebracht wird und danach das erhaltene Faser/Polymer-Formteil unter Beibehaltung seiner Form und/oder Oberflächenstruktur auf eine Temperatur < $Tg^P$ abgekühlt wird.

**13.** Faser/Polymer-Formteil erhältlich nach einem Verfahren gemäß Anspruch 12.

**14.** Verwendung eines Faser/Polymer-Formteils gemäß Anspruch 13 als Bauelement im Fahrzeugbau, in Bauwerken und in Möbeln.

**Claims**

**1.** A process for producing a thermoformable and/or - embossable fiber/polymer composite using a fibrous lignocellulosic substrate S and a polymer P, which comprises

i) homogeneously mixing the substrate S and the polymer P, then
ii) converting the substrate S/polymer P mixture to a fiber web, and then
iii) compacting the resultant fiber web at a temperature not less than the glass transition temperature of the polymer P [$Tg^P$] to give a thermoformable and/or - embossable fiber/polymer composite,

wherein

a) the substrate S comprises acetylated lignocellulosic fibers, and
b) the polymer P is thermoplastic and has a $Tg^P$ ≥ 20°C measured to DIN EN ISO 11357-2 (2013-05) and is used in the form of an aqueous dispersion, with a drying step after process stage i), during and/or after process stage ii), and where fibrous lignocellulosic substrate means those particles that are formed essentially from lignocellulose and have a ratio of their longest dimension to their shortest dimension of at least ≥ 5 and have a shortest dimension of ≤ 2 mm, where the shortest dimension is determined at an angle of 90° to the connecting line of the longest dimension of the particles, and
wherein ≥ 0.1% and ≤ 30% by weight of polymers P is used, based on the amount of fibrous substrate S, and wherein the density of the fiber/polymer composite increases by a factor ≥ 3 compared to the corresponding fiber web.

**2.** The process according to claim 1, wherein the aqueous dispersion of the polymer P has been obtained by free-radically initiated emulsion polymerization of ethylenically unsaturated monomers P [monomers P] in an aqueous medium in the presence of a polymer A, where the polymer A is formed from

a) 80% to 100% by weight of at least one ethylenically unsaturated mono- and/or dicarboxylic acid [monomers A1] and
b) 0% to 20% by weight of at least one further ethylenically unsaturated monomer which differs from the monomers A1 [monomers A2], in copolymerized form,

and where the monomers P are chosen in terms of type and amount such that the resultant polymer P has a $Tg^P$ ≥ 20°C.

**3.** The process according to claim 1 or 2, wherein

• the substrate S is introduced into a gas stream [process stage ia)], then
• the substrate S in the gas stream is contacted and mixed homogeneously with an aqueous dispersion of a polymer P [process stage ib)], then
• the resultant substrate S/polymer P mixture is dried in the gas stream and then deposited [process stage ic)], then
• the resultant deposited substrate S/polymer P mixture is converted to a fiber web [process stage ii)], and then
• the resultant fiber web is compacted at a temperature ≥ $Tg^P$ to give a fiber/polymer composite [process stage iii)].

**4.** The process according to claim 2 or 3, wherein the weight ratio of polymer P to polymer A is ≥ 1 and ≤ 10.

5. The process according to any of claims 2 to 4, wherein the polymer A has a number-average molecular weight of ≥ 1000 and ≤ 30 000 g/mol.

6. The process according to any of claims 1 to 5, wherein the polymer P is prepared using

≥ 90% and ≤ 99.9% by weight of styrene and/or methyl methacrylate,
≥ 0% and ≤ 9.9% by weight of n-butyl acrylate and/or 2-ethylhexyl acrylate, and
≥ 0.1% and ≤ 10.0% by weight of acrylic acid, methacrylic acid, glycidyl acrylate, glycidyl methacrylate, n-hydroxyethyl and n-hydroxypropyl acrylate and methacrylate, n-aminoethyl and n-aminopropyl acrylate and methacrylate, butylene 1,4-glycol diacrylate and methacrylate, 1,2-, 1,3- and 1,4-divinylbenzene, allyl acrylate and/or allyl methacrylate,
where the amounts add up to 100% by weight.

7. The process according to any of claims 1 to 6, wherein the substrate S comprises ≥ 50% by weight of acetylated lignocellulosic fibers.

8. The process according to any of claims 1 to 7, wherein the substrate S consists to an extent of 100% by weight of acetylated lignocellulosic fibers.

9. The process according to any of claims 1 to 8, wherein the resultant fiber/polymer composite is twodimensional and has a basis weight of ≥ 500 and ≤ 30 000 g/m$^2$.

10. A fiber/polymer composite obtainable by a process according to any of claims 1 to 9.

11. The use of a fiber/polymer composite according to claim 10 for production of a fiber/polymer molding that differs in its shape and/or surface structure from the fiber/polymer composite used.

12. A process for producing a fiber/polymer molding, which comprises heating a thermoformable and/or - embossable fiber/polymer composite according to claim 10 up to a temperature ≥ $Tg^P$, converting the fiber/polymer composite thus obtained at a temperature ≥ $Tg^P$ to the desired shape and/or surface structure of the fiber/polymer molding and then cooling the resultant fiber/polymer molding down to a temperature < $Tg^P$ while retaining its shape and/or surface structure.

13. A fiber/polymer molding obtainable by a process according to claim 12.

14. The use of the fiber/polymer molding according to claim 13 as component in motor vehicle construction, in built structures and in furniture.

## Revendications

1. Procédé de fabrication d'un composite de fibre/polymère pouvant être thermoformé et/ou thermogaufré à l'aide d'un substrat S fibreux contenant de la lignocellulose et d'un polymère P, **caractérisé en ce que**

i) le substrat S et le polymère P sont mélangés de manière homogène, puis
ii) le mélange substrat S/polymère P est transformé en une nappe, puis
iii) la nappe obtenue est densifiée à une température supérieure ou égale à la température de transition vitreuse du polymère P [$Tg^P$] en un composite de fibre/polymère pouvant être thermoformé et/ou thermogaufré,

dans lequel

a) le substrat S comprend des fibres acétylées contenant de la lignocellulose et
b) le polymère P est thermoplastique et présente une $Tg^P$ ≥ 20°C, mesurée selon la norme DIN EN ISO 11357-2 (2013-05), et est utilisé sous forme d'une dispersion aqueuse, où, après l'étape de procédé i), pendant et/ou après l'étape de procédé ii), une étape de séchage a lieu et l'expression substrat fibreux contenant de la lignocellulose signifiant des particules qui sont essentiellement constituées de lignocellulose et dont le rapport de leur extension la plus longue à leur extension la plus courte est au moins ≥ 5 et dont l'extension la plus courte est ≤ 2 mm, l'extension la plus courte étant déterminée à un angle de 90° par rapport à la ligne de raccordement de son

extension la plus longue et
≥ 0,1 et ≤ 30% en poids de polymère P, par rapport à la quantité de substrat fibreux S, étant utilisés et
la densité du composite de fibre/polymère augmentant d'un facteur ≥ 3 par rapport à la nappe correspondante.

**2.** Procédé selon la revendication 1, **caractérisé en ce que** la dispersion aqueuse du polymère P a été obtenue par polymérisation en émulsion initiée de manière radicalaire de monomères éthyléniquement insaturés P [monomères P] dans un milieu aqueux en présence d'un polymère A, le polymère A étant formé, sous forme copolymérisée, à partir de

a) 80 à 100% en poids d'au moins un acide monocarboxylique et/ou dicarboxylique éthyléniquement insaturé [monomères A1] et
b) 0 à 20% en poids d'au moins un autre monomère éthyléniquement insaturé qui se distingue des monomères A1 [monomères A2],

et les monomères P étant choisis, en ce qui concerne le type et la quantité, de manière telle que le polymère P obtenu présente une $Tg^P$ ≥ 20°C.

**3.** Procédé selon la revendication 1 ou 2, **caractérisé en ce que**

• le substrat S est introduit dans un flux gazeux [étape de procédé ia)], puis
• le substrat S dans le flux gazeux est mis en contact avec une dispersion aqueuse d'un polymère P et mélangé de manière homogène [étape de procédé ib)], puis
• le mélange substrat S/polymère P obtenu est séché dans le flux gazeux et ensuite séparé [étape de procédé ic)], puis
• le mélange substrat S/polymère P séparé obtenu est transformé en une nappe [étape de procédé ii)], puis
• la nappe obtenue est densifiée à une température ≥ $Tg^P$ en un composite de fibre/polymère [étape de procédé iii)].

**4.** Procédé selon la revendication 2 ou 3, **caractérisé en ce que** le rapport pondéral de polymère P à polymère A est ≥ 1 et ≤ 10.

**5.** Procédé selon l'une des revendications 2 à 4, **caractérisé en ce que** le polymère A présente une masse moléculaire moyenne en nombre ≥ 1000 et ≤ 30.000 g/mole.

**6.** Procédé selon l'une des revendications 1 à 5, **caractérisé en ce que** pour la préparation du polymère P, on utilise

≥ 90 à ≤ 99,9% en poids de styrène et/ou de méthacrylate de méthyle,
≥ 0 et ≤ 9,9% en poids d'acrylate de n-butyle et/ou d'acrylate de 2-éthylhexyle et
≥ 0,1 et ≤ 10,0% en poids d'acide acrylique, d'acide méthacrylique, d'acrylate de glycidyle, de méthacrylate de glycidyle, d'acrylate et de méthacrylate de n-hydroxyéthyle et de n-hydroxypropyle, d'acrylate et de méthacrylate de n-aminoéthyle et de n-aminopropyle, de diacrylate et de diméthacrylate de 1,4-butylèneglycol, de 1,2-divinylbenzène, de 1,3-divinylbenzène et de 1,4-divinylbenzène, d'acrylate d'allyle et/ou de méthacrylate d'allyle, la somme des quantités valant 100% en poids.

**7.** Procédé selon l'une des revendications 1 à 6, **caractérisé en ce que** le substrat S contient ≥ 50% en poids de fibres acétylées contenant de la lignocellulose.

**8.** Procédé selon l'une des revendications 1 à 7, **caractérisé en ce que** le substrat S est constitué à raison de 100% en poids de fibres acétylées contenant de la lignocellulose.

**9.** Procédé selon l'une des revendications 1 à 8, **caractérisé en ce que** le composite de fibre/polymère obtenu est plat et présente un poids surfacique ≥ 500 et ≤ 30.000 $g/m^2$.

**10.** Composite de fibre/polymère pouvant être obtenu selon un procédé selon l'une des revendications 1 à 9.

**11.** Utilisation d'un composite de fibre/polymère selon la revendication 10 pour la fabrication d'une pièce moulée de fibre/polymère qui se distingue par sa forme et/ou sa structure de surface du composite de fibre/polymère utilisé.

**12.** Procédé de fabrication d'une pièce moulée de fibre/polymère, **caractérisé en ce qu'**un composite de fibre/polymère pouvant être thermoformé et/ou thermogaufré selon la revendication 10 est chauffé à une température $\geq Tg^P$, le composite de fibre/polymère ainsi obtenu est amené à une température $\geq Tg^P$ dans la forme souhaitée et/ou à la structure de surface souhaitée de la pièce moulée de fibre/polymère, puis la pièce moulée de fibre/polymère obtenue est refroidie, tout en conservant sa forme et/ou sa structure de surface, à une température < Tg".

**13.** Pièce moulée de fibre/polymère pouvant être obtenue selon un procédé selon la revendication 12.

**14.** Utilisation d'une pièce moulée de fibre/polymère selon la revendication 13 comme élément dans la construction de véhicules, dans les bâtiments et dans les meubles.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 200773218 A
- WO 2017140520 A
- EP 18188499
- US 5821359 A
- GB 2456915 A
- US 6632326 B
- EP 680810 A
- WO 2005077626 A
- WO 2011095824 A
- WO 2014131683 A
- WO 2014131684 A
- US 4269749 A
- DE 4003422 A
- EP 771328 A
- DE 19624299 A
- DE 19621027 A
- DE 19741184 A
- DE 19741187 A
- DE 19805122 A
- DE 19828183 A
- DE 19839199 A
- DE 19840586 A
- DE 19847115 A
- EP 40419 B
- EP 567812 A
- EP 614922 A
- DE 4213965 A


### In der Beschreibung aufgeführte Nicht-Patentliteratur


- **HOLGER MILITZ**. Übersichtsbericht - Acetyliertes Holz - [Naturwissenschaftliche und technologische Grundlagen, materialtechnische und ökonomische Möglichkeiten und Grenzen, aktueller Stand der Umsetzung. *SGD Süd-Forstliche Versuchsanstalt Rheinland-Pfalz*, 2011, http://www.waldrlp.de/fileadmin/website/fawfseiten/fawf/downloads/Projekte/-Seeg/acetylierungsübersic ht.pdf
- **ULF LOHMANN**. Holzlexikon. Nikol Verlagsgesellschaft, 2010
- **A. CALLUM** ; **S. HILL**. Wood Modifikation: Chemical, Thermal and Other Processes. Wiley, 2006
- **A. ECHTE**. Handbuch der Technischen Polymerchemie. VCH, 1993
- **B. VOLLMERT**. Grundriss der Makromolekularen Chemie. E. Vollmert Verlag, 1988, vol. 1
- Makromolekulare Stoffe. **HOUBEN-WEYL**. Methoden der organischen Chemie. Georg-Thieme-Verlag, 1961, vol. XIV/1, 411-420
- Makromolekulare Stoffe. **HOUBEN-WEYL**. Methoden der organischen Chemie. Georg-Thieme-Verlag, 1961, vol. XIV/1, 192-208
- Emulsionspolymerisation. Encyclopedia of Polymer Science and Engineering. 1987, vol. 8, 659
- **D.C. BLACKLEY**. *High Polymer Latices*, 1966, vol. 1, 35
- **H. WARSON**. *The Applications of Synthetic Resin Emulsions*, 1972, 246
- **D. DIEDERICH**. Chemie in unserer Zeit. 1990, vol. 24, 135-142
- Emulsion Polymerisation. Interscience Publishers, 1965
- **F. HÖLSCHER**. Dispersionen synthetischer Hochpolymerer. Springer-Verlag, 1969
- Encyclopedia of Polymer Science and Technology. John Wiley & Sons Inc., 1966, vol. 5, 847
- **T.G. FOX**. *Bull. Am. Phys. Soc.*, 1956, 123
- Ullmann's Encyclopädie der technischen Chemie. Verlag Chemie, 1980, vol. 19, 18
- **J. BRANDRUP** ; **E.H. IMMERGUT**. Polymer Handbook. J. Wiley, 1966
- **J. BRANDRUP, E.H. IMMERGUT**. Polymer Handbook. J. Wiley, 1975
- **J. BRANDRUP, E.H. IMMERGUT**. Polymer Handbook. J. Wiley, 1989
- Ullmann's Encyclopedia of Industrial Chemistry. Verlag Chemie, 1992, 169